# EUROPEAN PATENT APPLICATION

(11) **EP 4 726 452 A1**
(43) Date of publication of application: **15.04.2026**
(21) Application number: 24906230.8
(22) Date of filing: 12.12.2024
(51) Int. Cl.: G02B 7/02

(54) **LENS BARREL, LENS ASSEMBLY, CAMERA MODULE, AND TERMINAL DEVICE**

(30) Priority: 18.12.2023 CN 202311744878; 14.06.2024 CN 202410777396; 02.12.2024 CN 202411761096
(71) Applicant: Huawei Technologies Co., Ltd., Shenzhen, Guangdong 518129 (CN)
(72) Inventor: ZHOU, Shaowei, Shenzhen, Guangdong 518129 (CN); GUAN, Tiankui, Shenzhen, Guangdong 518129 (CN); CHEN, Hongfu, Shenzhen, Guangdong 518129 (CN); ZHANG, Kaiyuan, Shenzhen, Guangdong 518129 (CN)
(74) Representative: Thun, Clemens
(86) International application number: PCT/CN2024/138794
(87) International publication number: WO 2025/130747

(57) **Abstract**

This application relates to the field of camera technologies, and in particular, to a lens barrel, a lens assembly, a camera module, and a terminal device. The lens barrel includes an inner wall and an outer wall, and the inner wall is configured to mount a lens group. The inner wall includes at least one first annular mounting surface, and the first annular mounting surface is configured to mount one trimmed lens in the lens group. Each first annular mounting surface includes a plurality of first curved surfaces and a plurality of first trimmed surfaces that are alternately connected around an optical axis of the lens group, and each first curved surface is configured to circumferentially abut against a corner arc of the trimmed lens. The outer wall includes at least one first surface, and the first surface includes a plurality of second curved surfaces and a plurality of second trimmed surfaces that are alternately connected around an optical axis of the lens. Along a direction perpendicular to the optical axis of the lens group, a projection of any first annular mounting surface on the outer wall of the lens barrel is located on the first surface. Therefore, the trimmed inner wall and the trimmed outer wall fit together, enabling the lens barrel to have more uniform shrinkage during manufacturing and thereby ensuring roundness of the lens barrel.

## Description

### CROSS-REFERENCE TO RELATED APPLICATIONS

This application claims priorities to Chinese Patent Application No. 202311744878.1, filed with the China National Intellectual Property Administration on December 18, 2023 and entitled "LENS BARREL, LENS ASSEMBLY, CAMERA MODULE, AND TERMINAL DEVICE", to Chinese Patent Application No. 202410777396.4, filed with the China National Intellectual Property Administration on June 14, 2024, and entitled "LENS BARREL, LENS ASSEMBLY, CAMERA MODULE, AND TERMINAL DEVICE", and to Chinese Patent Application No. 202411761096.3, filed with the China National Intellectual Property Administration on December 2, 2024, and entitled "LENS BARREL, LENS ASSEMBLY, CAMERA MODULE, AND TERMINAL DEVICE", all of which are incorporated herein by reference in their entireties.

### TECHNICAL FIELD

This application relates to the field of camera technologies, and in particular, to a lens barrel, a lens assembly, a camera module, and a terminal device.

### BACKGROUND

As a camera module of a terminal device is in ultimate pursuit of high image quality and high resolution, a lens optical structure of the camera module becomes complex, and a volume of the camera module becomes larger accordingly. This limits a lightweight development trend of the terminal device. Based on this, a trimmed lens structure is proposed in a conventional technology, that is, a circular lens fits into a trimmed polygonal lens barrel, to reduce a volume and quality of a camera module. During manufacturing of the camera module, the trimmed polygonal lens barrel and the circular lens are manufactured by using an injection molding process. In the injection molding process, non-uniform shrinkage of the lens barrel and the lens is likely to cause great changes to a radian of an inner arc of the lens barrel and a radian of an outer arc of the lens. Consequently, an excessively large assembly stress of the lens causes a relatively large structural tolerance, and a relatively large coaxiality error between different lenses.

### SUMMARY

This application provides a lens barrel, a lens assembly, a camera module, and a terminal device. The lens barrel ensures assembly coaxiality during assembly of a trimmed lens for the lens barrel while reducing a volume of the lens.

According to a first aspect, this application provides a lens barrel. The lens barrel may be applied to a camera module. The lens barrel includes an inner wall and an outer wall, and the inner wall is configured to mount a lens group. The inner wall includes at least one first annular mounting surface, and the first annular mounting surface is configured to mount one trimmed lens in the lens group. Each first annular mounting surface includes a plurality of first curved surfaces and a plurality of first trimmed surfaces that are alternately connected around an optical axis of the lens group, and each first curved surface is configured to circumferentially abut against a corner arc of the trimmed lens. A distance between any position of the first curved surface and the optical axis of the lens group is not less than a distance between any position of the first trimmed surface and the optical axis. The outer wall includes at least one first surface, and the first surface includes a plurality of second curved surfaces and a plurality of second trimmed surfaces that are alternately connected around an optical axis of the lens. A distance between any position of the second curved surface and the optical axis of the lens group is not less than a distance between any position of the second trimmed surface and the optical axis of the lens group. Along a direction perpendicular to the optical axis of the lens group, a projection of any first annular mounting surface on the outer wall of the lens barrel is located on the first surface, the first curved surface corresponds to the second curved surface, and the first trimmed surface corresponds to the second trimmed surface. Therefore, a trimmed inner wall fits a trimmed outer wall, thereby enabling the lens barrel to have more uniform shrinkage during manufacturing and ensuring roundness of the lens barrel.

The lens barrel is designed with a trimmed inner wall structure to fit the trimmed lens, and is designed with a trimmed outer wall structure to fit the trimmed inner wall structure, so that a roundness requirement of the lens barrel in manufacturing can be ensured while reducing a volume of the lens barrel. When the lens group is assembled into the lens barrel, coaxiality between a plurality of lenses can be ensured, an assembly stress between the lens and the lens barrel can be reduced, and reliability of the lens assembly can be ensured.

In a possible implementation, the first curved surface includes a first protrusion protruding toward the optical axis of the lens group, and each first protrusion has a first abutting portion configured to abut against an apex arc of the trimmed lens. Along a direction perpendicular to the optical axis of the lens, a distance between each first abutting portion and the optical axis is equal, to ensure coaxiality after the trimmed lens is mounted on the first annular mounting surface.

In a possible implementation, the inner wall further includes at least one second annular mounting surface, and the at least one second annular mounting surface is located on a side that is of the at least one first annular mounting surface and that is close to an object side. The second annular mounting surface is configured to circumferentially assemble a circular lens in the lens group, and each second annular mounting surface is rotationally symmetric around the optical axis of the lens. The outer wall includes a second surface that is rotationally symmetric along the optical axis of the lens group; and along the direction perpendicular to the optical axis of the lens, a projection of the at least one second annular mounting surface on the outer wall of the lens barrel is located on the first surface.

In a possible implementation, each second annular mounting surface includes three second protrusions, and each second protrusion has a second abutting portion configured to abut against an outer circumferential surface of the circular lens. Along the direction perpendicular to the optical axis of the lens, a distance between each second abutting portion and the optical axis is equal. When the circular lens is mounted on the second annular mounting surface, the three second protrusions abut against a circumferential edge of the circular lens to fix the circular circumferential edge, and the three second protrusions may determine coaxiality between the assembled circular lens and the optical axis.

In a possible implementation, along the direction perpendicular to the optical axis of the lens group, a central axis of at least one of the second protrusions is collinear with a central axis of one of the first trimmed surfaces, to facilitate manufacturing of the lens barrel.

The first abutting portion is in point contact or surface contact with the trimmed lens; and/or the second abutting portion is in point contact or surface contact with the circular lens.

In a possible implementation, the inner wall includes a first bearing surface. Along the optical axis of the lens group, the first bearing surface is located at one end of the inner wall close to the object side, and the first bearing surface is configured to axially abut against a first lens that is of the lens group and that is close to the object side, thereby positioning, along the optical axis, an end surface that is of the lens group and that faces toward the object side.

In a possible implementation, the inner wall includes a second bearing surface. Along the optical axis of the lens group, the second bearing surface is located on a side that is of the first bearing surface and that is close to an image side, and the second bearing surface is configured to axially abut against a surface that is of a lens in the lens group and that faces toward the object side. The second bearing surface may position, along the optical axis, end face surfaces that are of some of the lenses and that face toward the object side.

In a possible implementation, along the optical axis of the lens group, the inner wall includes an end trimmed surface located at an end portion of the lens barrel close to the object side, and the end trimmed surface is spaced apart from the first trimmed surface; and along a radial direction of the lens barrel, a distance between each end trimmed surface and the second trimmed surface is within a range of 0.2 mm to 2 mm, so that strength of the lens barrel can be ensured, and that an outer surface of the lens barrel has a relatively small size.

According to a second aspect, this application provides a lens assembly. The lens assembly includes a lens group and any lens barrel provided in the first aspect. The lens group includes at least one trimmed lens, and each trimmed lens is correspondingly assembled on one first annular mounting surface. Between the trimmed lens and the first annular mounting surface that match each other, the trimmed lens includes a plurality of corner arcs, the plurality of corner arcs abut against a plurality of first curved surfaces of the first annular mounting surface in a one-to-one correspondence, and the first curved surfaces of the first annular mounting surface may circumferentially fix the trimmed lens. The lens assembly includes the trimmed lens barrel and the trimmed lens, so that a volume of the lens assembly can be reduced, and that assembly coaxiality of the lens barrel during assembly of the trimmed lens can be ensured.

In a possible implementation, the inner wall of the lens barrel further includes at least one second annular mounting surface, and the at least one second annular mounting surface is located on a side that is of the at least one first annular mounting surface and that is close to an object side. The lens group includes at least one circular lens, and each circular lens is correspondingly assembled on one first annular mounting surface.

In a possible implementation, a shape of the trimmed lens does not match a shape of the circular lens, and a surface that is of the trimmed lens adjacent to the at least one circular lens and that faces toward the object side abuts against the inner wall of the lens barrel, to ensure stability of mounting.

In a possible implementation, each trimmed lens is an injection-molded body, and an injection gate of each trimmed lens is located at a circumferential edge of the trimmed lens.

In a possible implementation, an injection gate of the at least one trimmed lens is located at one of the corner arcs; and along a circumferential direction of the trimmed lens, a circumferential size of the injection gate is less than a circumferential size of the corner arc, to ensure that assembly of the corner arc of the trimmed lens and the first annular mounting surface of the lens barrel is not affected when an injection gate structure at an injection gate position is cut off.

In a possible implementation, at least one corner arc of the at least one trimmed lens includes a side trimmed surface; and along the circumferential direction of the trimmed lens, a circumferential size of the side trimmed surface is less than the circumferential size of the corner arc, without affecting assembly of the corner arc of the trimmed lens and the first annular mounting surface of the lens barrel. An increase of side trimmed surfaces causes an increase of trimmed surfaces of the trimmed lens, which may further optimize a size of the lens barrel.

In a possible implementation, along the circumferential direction of the trimmed lens, the corner arc includes a first curved sub-surface and a second curved sub-surface, and the first curved sub-surface and the second curved sub-surface are respectively located on two sides of the side trimmed surface. Trimmed surfaces may be added for the first curved sub-surface and the second curved sub-surface, which helps further reduce the size of the lens barrel.

In a possible implementation, the lens group further includes a first pressing ring for fastening to the inner wall of the lens barrel. Along an optical axis of the lens group, the first pressing ring is fastened to the inner wall of the lens barrel and abuts against a surface that is of the trimmed lens group and that is close to an image side. The first pressing ring can position and fastening the lens group on the surface that is of the lens group and that faces toward the image side.

Along the optical axis of the lens group, a plurality of reinforcing portions are disposed on a side that is of the first pressing ring and that faces toward the trimmed lens group, and the plurality of reinforcing portions are in a one-to-one correspondence with the plurality of first curved surfaces. The first pressing ring has an arcuate portion located between any two adjacent reinforcing portions, and the arcuate portion protrudes toward the object side. When the lens assembly is subject to impact or vibration, a force exerted by the lens barrel on the first pressing ring may be absorbed by a deformation of the arcuate portion, and the deformation of the arcuate portion has a preloading fastening effect on the trimmed lens through the reinforcing portion, to protect the trimmed lens from being affected by the impact or vibration.

In a possible implementation, the inner wall of the lens barrel includes a first bearing surface. Along the optical axis of the lens group, a surface that is of a first lens in the lens group and close to the object side and that faces toward the object side abuts against the first bearing surface. The first bearing surface can position and fastening the lens group on the surface that is of the lens group and that faces toward the object side.

In a possible implementation, the inner wall of the lens barrel includes a second bearing surface, and the second bearing surface is located between the first bearing surface and the first pressing ring. The lens group includes a second pressing ring for fastening to the inner wall of the lens barrel, and the second pressing ring is located between the first bearing surface and the second bearing surface. Along the optical axis of the lens group, the lens group includes a first lens group and a second lens, and the first lens group is located on a side that is of the second lens group and faces toward the object side. A surface that is of the first lens group and that faces toward the object side abuts against the first bearing surface, a surface that is of the first lens group and that faces toward the image side abuts against the second pressing ring, and the first bearing surface and the second pressing ring may position and fastening the first lens group along the optical axis. A surface that is of the second lens group and that faces toward the object side abuts against the second bearing surface, a surface that is of the second lens group and faces toward the image side abuts against the first pressing ring, and the first pressing ring and the second bearing surface may position and fastening the second lens group along the optical axis.

In a possible implementation, the first lens group includes a plurality of lenses, and any two adjacent lenses abut against each other along the optical axis of the lens group; and/or the second lens group includes a plurality of lenses, and any two adjacent lenses abut against each other along the optical axis of the lens group. Fitting in this manner reduces contact between the lens and the lens barrel, and helps improve coaxiality between the plurality of lenses.

In a possible implementation, the first pressing ring is fastened to the inner wall of the lens by using a first connector, and the second pressing ring is fastened to the inner wall of the lens by using a second connector. At least one of the first connector and the second connector is an adhesive, a screw, a screw, or a soldering material. A combination of the lens group and the lens barrel has better stability and reliability, and also helps improve optical performance of the lens group.

In a possible implementation, each trimmed lens includes an optical lens portion and an edge portion surrounding the optical lens portion; and along a radial direction of the trimmed lens, a distance between an edge of the optical lens portion and the optical axis of the lens group is greater than 0.8 times a distance between a trimmed edge of the trimmed lens and the optical axis of the lens group, so that the trimmed lens can perform a good light adjustment function.

In a possible implementation, along the radial direction of the trimmed lens, a distance between the optical trimmed edge and the edge of the optical lens portion is greater than 0.03 mm, to ensure accuracy of the size of the optical lens portion of the trimmed lens.

In a possible implementation, the inner wall of the lens barrel further includes at least one circular third annular mounting surface, and any third annular mounting surface is located on the side that is of the at least one first annular mounting surface and that is close to the object side; and the lens group includes at least one quasi-circular lens, a circumferential edge of each quasi-circular lens includes at least three lens protrusions, and each lens protrusion has a curved surface configured to abut against the third annular mounting surface; and along a radial direction of the lens barrel, curved surfaces of the lens protrusions have a same radius. When the quasi-circular lens is assembled on the third annular mounting surface, a curved surface of each lens protrusion abuts against the third annular mounting surface, and a position at which the quasi-circular lens is compressed by the third annular mounting surface is controllable, so that a lens deformation of the quasi-circular lens is controllable. The structure and distribution of the lens protrusions can be designed to improve optical performance of the quasi-circular lens.

In a possible implementation, along a circumferential direction of the quasi-circular lens, a central angle of any lens protrusion is within an angle range of 10° to 60°.

Along the circumferential direction of the quasi-circular lens, central angles corresponding to the at least three lens protrusions are within an angle range of 30° to 180°.

According to a third aspect, this application provides a camera module, including an image sensor and the lens assembly provided in the second aspect. The image sensor is disposed on a side that is of the trimmed lens group and that is close to an image side. Light on an object side may be projected through the lens assembly onto the image sensor for imaging. Because the lens assembly has a relatively small volume, miniaturization of the camera module can be easily achieved.

According to a fourth aspect, this application provides a terminal device, including a housing and the camera module provided in the third aspect. The camera module is mounted in the housing. The terminal device may be a common mobile terminal such as a mobile phone, a tablet computer, or a notebook computer, or may be a camera terminal in the fields of in-vehicle systems, security, and the like. The camera module may be miniaturized, which enables the terminal device to have better portability and also facilitates an appropriate layout of components in the housing of the terminal device.

### BRIEF DESCRIPTION OF DRAWINGS

FIG. 1 is a diagram of a structure of a terminal device according to an embodiment of this application;
FIG. 2a is a diagram of a structure of a camera module according to an embodiment of this application;
FIG. 2b is a diagram of a structure of a camera module according to an embodiment of this application;
FIG. 3a is a diagram of a structure of a trimmed lens in a lens assembly according to an embodiment of this application;
FIG. 3b is a diagram of a structure of a trimmed lens in a lens assembly according to an embodiment of this application;
FIG. 3c is a diagram of a simplified structure of a trimmed lens in a lens assembly according to an embodiment of this application;
FIG. 4a is a diagram of a fitting state between a lens barrel and a lens group in a lens assembly according to an embodiment of this application;
FIG. 4b is a diagram of a fitting state between a lens barrel and a lens group in a lens assembly according to an embodiment of this application;
FIG. 5a is a diagram of a structure of a lens barrel in a lens assembly according to an embodiment of this application;
FIG. 5b is a perspective view of a lens barrel in a lens assembly according to an embodiment of this application;
FIG. 5c is a perspective view of a lens barrel in a lens assembly according to an embodiment of this application;
FIG. 6a is a diagram of a structure of a lens barrel in a lens assembly according to an embodiment of this application;
FIG. 6b is an enlarged view of details at M1 in FIG. 6a;
FIG. 7a is a diagram of a fitting state between a lens barrel and a trimmed lens in a lens assembly according to an embodiment of this application;
FIG. 7b is an enlarged view of details at M2 in FIG. 7a;
FIG. 8a is a diagram of a structure of a first annular mounting surface of a lens barrel in a lens assembly according to an embodiment of this application;
FIG. 8b is a diagram of a structure of a first annular mounting surface of a lens barrel in a lens assembly according to an embodiment of this application;
FIG. 8c is a diagram of a structure of a first annular mounting surface of a lens barrel in a lens assembly according to an embodiment of this application;
FIG. 9a is an exploded view of a lens assembly according to an embodiment of this application;
FIG. 9b is a diagram of a cross-sectional structure of a lens assembly according to an embodiment of this application;
FIG. 9c is a diagram of a cross-sectional structure of a lens assembly according to an embodiment of this application;
FIG. 9d is a diagram of a partial cross-sectional structure of a lens assembly according to an embodiment of this application;
FIG. 10a is a diagram of a structure of a first pressing ring in a lens assembly according to an embodiment of this application;
FIG. 10b is a diagram of a cross-sectional structure of a first pressing ring in a lens assembly according to an embodiment of this application;
FIG. 10c is a diagram of a fitting state between a first pressing ring and a trimmed lens in a lens assembly according to an embodiment of this application;
FIG. 11a is a diagram of a fitting state between a lens barrel and a lens group in a lens assembly according to an embodiment of this application;
FIG. 11b is a diagram of a fitting state between a lens barrel and a lens group in a lens assembly according to an embodiment of this application;
FIG. 12a is a diagram of a structure of a lens barrel in a lens assembly according to an embodiment of this application;
FIG. 12b is a perspective view of a lens barrel in a lens assembly according to an embodiment of this application;
FIG. 12c is a perspective view of a lens barrel in a lens assembly according to an embodiment of this application;
FIG. 13a is a diagram of a structure of a lens barrel in a lens assembly according to an embodiment of this application;
FIG. 13b is an enlarged view of details at N1 in FIG. 13a;
FIG. 14a is a diagram of a fitting state between a lens barrel and a circular lens in a lens assembly according to an embodiment of this application;
FIG. 14b is an enlarged view of details at N2 in FIG. 14a;
FIG. 15a is a diagram of a structure of a second annular mounting surface of a lens barrel in a lens assembly according to an embodiment of this application;
FIG. 15b is a diagram of a structure of a second annular mounting surface of a lens barrel in a lens assembly according to an embodiment of this application;
FIG. 15c is a diagram of a structure of a second annular mounting surface of a lens barrel in a lens assembly according to an embodiment of this application;
FIG. 16a is an exploded view of a lens assembly according to an embodiment of this application;
FIG. 16b is a diagram of a cross-sectional structure of a lens assembly according to an embodiment of this application;
FIG. 16c is a diagram of a cross-sectional structure of a lens assembly according to an embodiment of this application;
FIG. 17 is a diagram of a partial cross-sectional structure of a lens assembly according to an embodiment of this application;
FIG. 18a is a diagram of a structure of a trimmed lens in a lens assembly according to an embodiment of this application;
FIG. 18b is a diagram of a structure of a trimmed lens in a lens assembly according to an embodiment of this application;
FIG. 19 is a diagram of a structure of a trimmed lens in a lens assembly according to an embodiment of this application;
FIG. 20a is a diagram of a structure of a quasi-circular lens in a lens assembly according to an embodiment of this application;
FIG. 20b is a diagram of a structure of a quasi-circular lens in a lens assembly according to an embodiment of this application; and
FIG. 21 is a diagram of a fitting state between a lens barrel and a quasi-circular lens in a lens assembly according to an embodiment of this application.

Reference numerals: 100-camera module; 200-housing; 10-lens assembly; 20-image sensor; 30-camera actuator; 1-lens barrel; 11-inner wall; 111-first annular mounting surface; 1111-first curved surface; 1112-first trimmed surface; 112-second annular mounting surface; 1131-first bearing surface; 1132-second bearing surface; 114-third annular mounting surface; 12-outer wall; 121-first annular surface; 1211-second curved surface; 1212-second trimmed surface; 122-second annular surface; 2-lens group; 21-trimmed lens; 2101-optical lens portion; 2102-edge portion; 211-arc segment; 2110-side trimmed surface; 2111 -first curved sub-surface; 2112-second curved sub-surface; 212-line segment; 22-circular lens; 231-first pressing ring; 2311-arc portion; 2312-arcuate portion; 232-second pressing ring; 24-soma film; 251-first connector; 252-second connector; 26-quasi-circular lens.

### DESCRIPTION OF EMBODIMENTS

Currently, a camera function is a basic function of a terminal device. In pursuit of high image quality and high resolution, a camera module becomes complex, but a complex structure increases a volume of the camera module. To resolve a problem that an increase in the volume of the camera module contradicts a development trend toward miniaturization and portability of the terminal device, a lens barrel of the camera module may be designed with trimmed edges to reduce a volume of the lens barrel. However, fitting between a circular lens and the trimmed lens barrel is subject to a problem of non-uniform shrinkage during injection molding in a manufacturing process. Consequently, an assembly tolerance between the lens barrel and the lens is large, and coaxiality between different lenses is poor.

In view of this, embodiments of this application provide a lens barrel, a lens assembly, a camera module, and a terminal device. The lens barrel is designed with trimmed edges, and is configured to match a trimmed lens, to ensure assembly coaxiality in assembling the trimmed lens in the lens barrel while reducing a volume of the lens.

To make the objectives, technical solutions, and advantages of this application clearer, the following further describes this application in detail with reference to the accompanying drawings.

Terms used in the following embodiments are merely intended to describe specific embodiments, but are not intended to limit this application. As used in this specification and the appended claims of this application, terms "one", "a", and "this" expressed in singular forms are also intended to include expressions such as "one or more", unless otherwise explicitly indicated in the context.

Reference to "an embodiment", "some embodiments", or the like described in this specification means that a specific feature, structure, or characteristic described with reference to the embodiment is included in one or more embodiments of this application. Therefore, statements such as "in an embodiment", "in some embodiments", "in some other embodiments", and "in other embodiments" that appear at different places in this specification do not necessarily refer to a same embodiment, but mean "one or more but not all embodiments", unless otherwise specifically emphasized in another manner. The terms "comprise", "include", and "have", and variants thereof all mean "include but are not limited to", unless otherwise specifically emphasized in another manner.

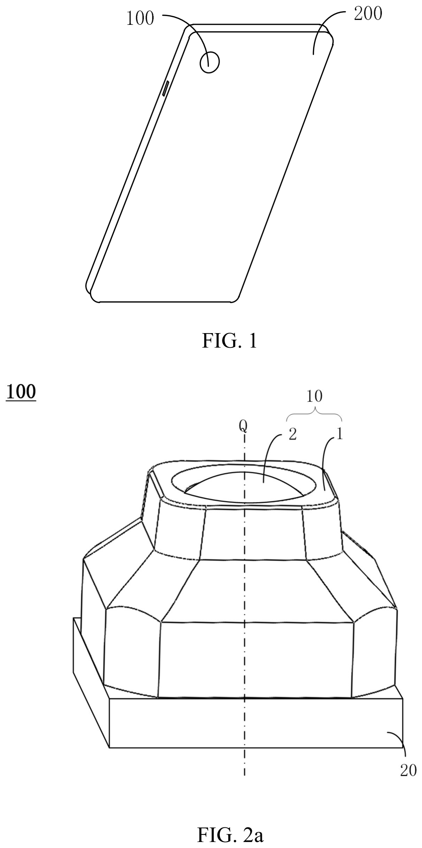

The terminal device provided in embodiments of this application may be a common mobile terminal such as a mobile phone, a tablet computer, or a notebook computer, or may be a camera terminal in the fields of in-vehicle systems, security, and the like. FIG. 1 is a diagram of a structure of a mobile phone. The mobile phone includes a housing 200 and a component disposed in the housing 200. The component includes a camera module 100. During specific assembly, the camera module 100 is fastened in the housing 200, and an opening for fitting the camera module 100 is provided in the housing 200, so that a lens of the camera module 100 is exposed. The camera module 100 has a relatively small size, which enables the terminal device to have better portability and also facilitates an appropriate layout of components in the housing of the terminal device.

FIG. 2a shows a structure of a camera module 100. The camera module 100 includes a lens assembly 10 and an image sensor 20, and the lens assembly 10 is disposed on an object side of the image sensor 20. As shown in FIG. 2a, the lens assembly 10 includes a lens barrel 1 and a lens group 2. The lens group 2 is assembled in the lens barrel 1. The lens group 2 may form a channel for light to pass through, and the channel is parallel to an optical axis Q of the lens group 2. Light on the object side may be projected through the lens assembly 10 onto the image sensor 20 for imaging. The image sensor 20 includes an image sensor body, another externally connected component, and a support structure.

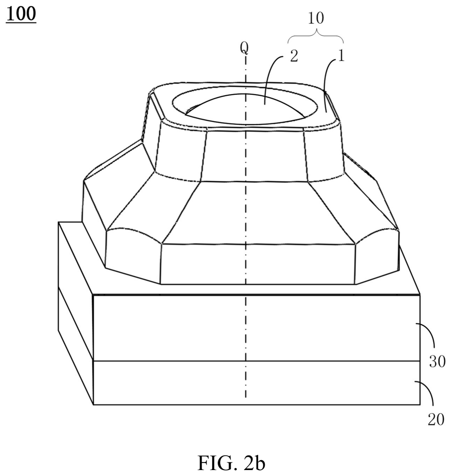

FIG. 2b shows another structure of the camera module 100. A difference from the structure shown in FIG. 2b lies in that the camera module 100 further includes a camera actuator 30, where a fixed end of the camera actuator 30 is fixed relative to the image sensor 20, and a lens assembly 10 is fastened to a movable end of the camera actuator 30. The drive actuator 30 may drive the lens assembly 10 to approach or move away from the image sensor 20, to meet a requirement of focusing for imaging.

Based on FIG. 2a and FIG. 2b, the lens barrel 1 in the lens assembly 10 provided in this embodiment of this application is a trimmed lens barrel, and an outer circumferential surface of the lens barrel 1 has a planar trimmed surface, so that the lens barrel 1 has a relatively small size on a plane perpendicular to the optical axis Q of the lens group 2.

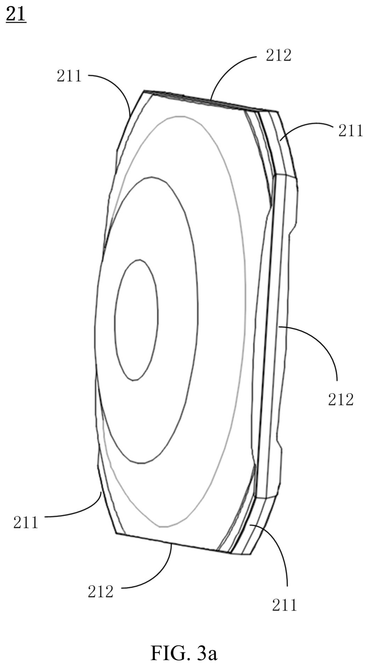

The lens group 2 provided in this embodiment of this application includes at least one trimmed lens 21 shown in FIG. 3a. A circumferential direction of the trimmed lens 21 includes an arc segment 211 and a line segment 212. The line segment 212 is a trimmed edge of the trimmed lens 21.

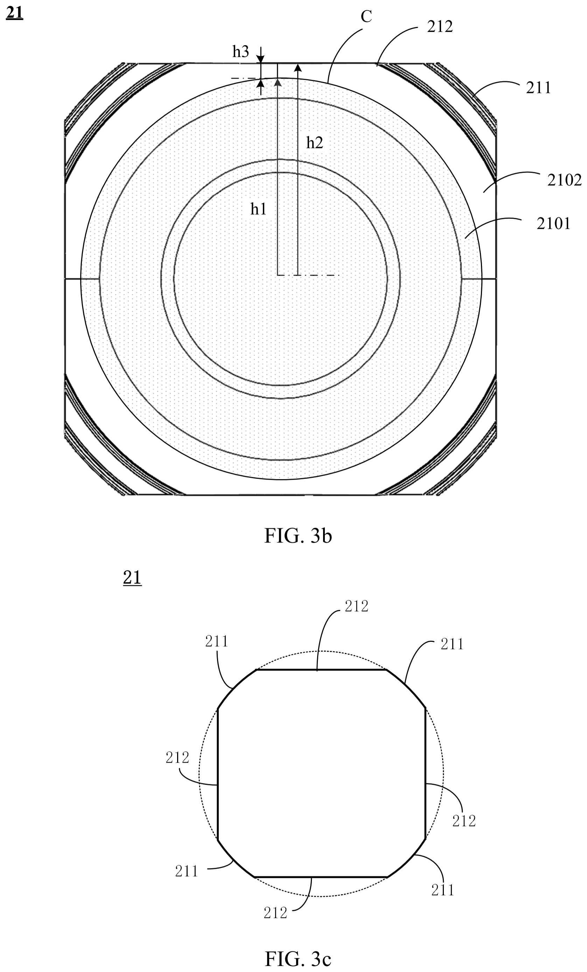

As shown in FIG. 3b, each trimmed lens 21 includes an optical lens portion 2101 and an edge portion 2102 surrounding the optical lens portion 2101, and the optical lens portion 2101 is an effective area in which the trimmed lens 21 is configured to perform an optical function. For ease of understanding, the optical lens portion 2101 and the edge portion 2102 are separated by using a reference circle C. A shaded area in the reference circle C is the optical lens portion 2101, that is, a main effective area for the optical function of the trimmed lens 21. This gray area may also be referred to as an optical trimmed aperture of the trimmed lens 21. Along a radial direction of the lens group 2, a radius of the optical lens portion 2101 is a distance h1 from an edge of the optical lens portion 2101 to the optical axis of the lens group 2, where h1 is greater than 0.8 times a distance h2 between a trimmed edge of the trimmed lens 21 and the optical axis of the lens group 2, so that the trimmed lens 21 can perform a good light adjustment function. In addition, a difference between h2 and h1 is h3. h3 may be considered as a distance between the optical lens portion 2101 and the trimmed edge of the trimmed lens 21. The distance may be considered as a structural margin or a structural extension of the optical lens portion 2101. h3 is greater than 0.03 mm, to ensure accuracy of the size of the optical lens portion 2101. This structural design can ensure good optical performance and structural strength of the trimmed lens 21.

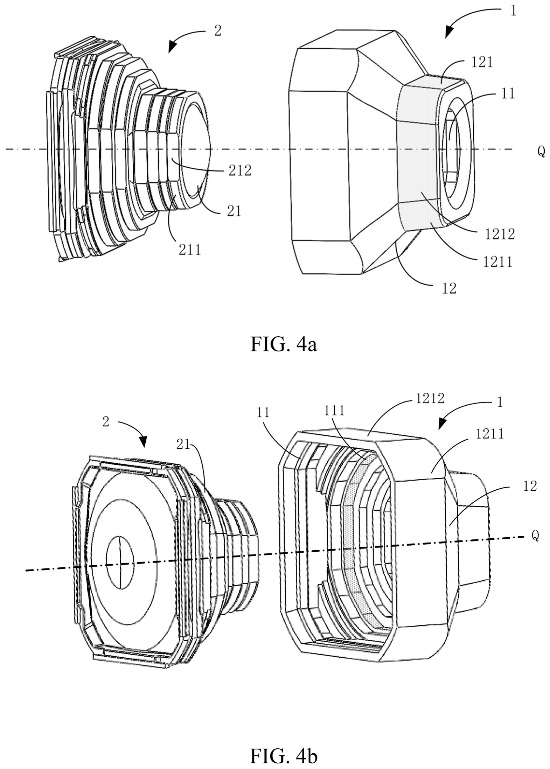

The trimmed lens 21 shown in FIG. 3c has a simplified structure, and the trimmed lens 21 may be formed by trimming a circular lens. A dashed line shows the original circular lens. The trimmed lens 21 may be obtained by uniformly and flatly cutting a periphery of the circular lens for a plurality of times, and an original arc edge of the circular lens is located between two trimmed edges. For example, the trimmed lens 21 includes four arc segments 211 and four line segments 212. The four line segments 212 are uniformly distributed around a central axis of the trimmed lens 21, a distance between each line segment 212 and the central axis of the trimmed lens 21 is equal, and each line segment is axisymmetric about the central axis of the trimmed lens 21. FIG. 4a and FIG. 4b are diagrams of a lens assembly 10 according to an embodiment of this application. As shown in FIG. 4a and FIG. 4b, the lens assembly 10 includes a lens barrel 1 and a lens group 2, and the lens group 2 includes at least one trimmed lens 21 similar to that shown in FIG. 3a. For example, a plurality of lenses in the lens group 2 are sequentially arranged along an optical axis Q, and may fit into and be fastened to the lens barrel 1. The plurality of lenses include a plurality of trimmed lenses 21, and line segments 212 of each trimmed lens 21 are parallel to each other. The lens barrel 1 has a cavity that extends along the optical axis Q of the lens group 2, and the cavity may be configured to mount the lens group 2. It may be considered that the lens barrel 1 is a cylindrical structure surrounding the optical axis Q, and the lens barrel 1 has openings at two ends in the optical axis Q. The lens barrel 1 has an inner wall 11 and an outer wall 12. The inner wall 11 is a cavity wall of the lens barrel 1, and the outer wall 12 is an outer surface of the lens barrel 1. When the lens group 2 is mounted on the inner wall 11, a circumferential surface of the lens in the lens group 2 fits into the inner wall 11.

As shown in FIG. 4a, the outer wall 12 of the lens barrel 1 includes at least one first annular surface 121. For example, one first annular surface 121 is shown by shading. The first annular surface 121 includes a plurality of second curved surfaces 1211 and a plurality of second trimmed surfaces 1212, and the plurality of second curved surfaces 1211 and the plurality of second trimmed surfaces 1212 are alternately connected around the optical axis Q. A distance between any position of the second curved surface 1211 and the optical axis Q of the lens group 2 is not less than a distance between any position of the second trimmed surface 1212 and the optical axis Q of the lens group 2, so that the outer wall 12 of the lens barrel 1 exhibits a trimmed structure, and that a size of the lens barrel 1 in a direction perpendicular to the optical axis Q is reduced. When the lens group 2 fits into the lens barrel 1, the second trimmed surface 1212 is parallel to the line segment 212 of the trimmed lens 21. In FIG. 4a, radial sizes of the plurality of lenses in the lens group 2 gradually increase from an object side to an image side, and correspondingly, a radial size of the outer wall 12 of the lens barrel 1 also changes in a trend matching the lens group 2, to minimize a volume of the lens barrel 1.

With continued reference to FIG. 4b, the inner wall 11 includes at least one first annular mounting surface 111, and the first annular mounting surface 111 is in an annular shape around the optical axis Q. In FIG. 4a, one first annular mounting surface 111 is shown by shading. Specifically, when the inner wall 11 includes a plurality of first annular mounting surfaces 111, the plurality of first annular mounting surfaces 111 are sequentially arranged along the optical axis Q. Each first annular mounting surface 111 may be configured to mount one trimmed lens 21 in the lens group 2. It should be understood that the lens group 2 includes at least one trimmed lens 21. The lens group 2 may further include a lens in another shape, and the inner wall 11 of the lens barrel 1 may be correspondingly provided with a mounting structure that adapts to the another lens.

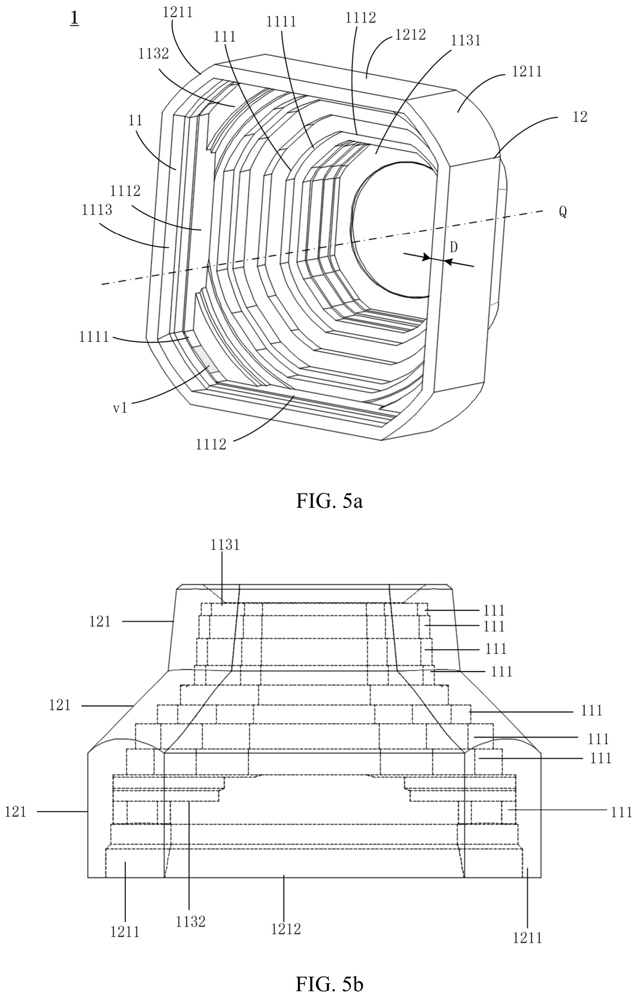

FIG. 5a is a diagram of a structure of the lens barrel 1. An interior of the lens barrel 1 may be observed from a side that is of the lens barrel 1 and that faces toward the image side. As shown in FIG. 5a, the plurality of first annular mounting surfaces 111 are sequentially arranged along the optical axis Q. Each first annular mounting surface 111 includes a plurality of first curved surfaces 1111 and a plurality of first trimmed surfaces 1112, and the plurality of first curved surfaces 1111 and the plurality of first trimmed surfaces 1112 are alternately connected around the optical axis Q. With reference to an overall structure of the lens barrel 1, it may be considered that the first curved surface 1111 is connected between two first trimmed surfaces 1112, and a location of the first curved surface 1111 corresponds to a corner portion of the lens barrel 1. A distance between any position of the first curved surface 1111 and the optical axis Q of the lens group 2 is not less than a distance between any position of the first trimmed surface 1112 and the optical axis Q. Along a direction perpendicular to the optical axis Q of the lens group 2, a projection of any first annular mounting surface 111 on the outer wall 12 of the lens barrel 1 is located on the first annular surface 121, the first curved surface 1111 corresponds to the second curved surface 1211 along a radial direction of the lens barrel 1, and the first trimmed surface 1112 corresponds to the second trimmed surface 1212 along the radial direction of the lens barrel 1. Therefore, the shape of the first annular mounting surface 111 of the lens barrel 1 can adapt to a shape of the first annular surface 121, so that wall thicknesses of the lens barrel 1 are approximately equal. During manufacturing of the lens barrel 1, the inner wall 11 and the outer wall 12 of the lens barrel 1 can maintain approximately equal shrinkage rates, to help ensure roundness of the first annular mounting surface 111 of the lens barrel 1. Along the optical axis Q, the inner wall 11 of the lens barrel 1 includes an end trimmed surface 1113 that is spaced apart from the first trimmed surface 1112, and the end trimmed surface 1113 is located at an end portion that is of the inner wall 11 of the lens barrel 1 and that is close to the image side. Along the radial direction of the lens barrel 1, an orthographic projection of the end trimmed surface 1113 on the outer wall 12 of the lens barrel 1 at least partially overlaps the second trimmed surface 1212, and a distance D between the end trimmed surface 1113 and the second trimmed surface 1212 is within a range of 0.2 mm to 2 mm, to minimize an outer diameter of the lens barrel 1 while ensuring structural strength of the lens barrel 1.

For example, one first annular mounting surface 111 includes four first curved surfaces 1111 and also four first trimmed surfaces 1112, which are configured to fit the trimmed lens 21 having four trimmed edges. Specifically, between the first annular mounting surface 111 and the corresponding trimmed lens 21 in each group, the first curved surface 1111 is configured to circumferentially fit into a corner arc of the trimmed lens 21, that is, an arc segment 211 of the trimmed lens 21. The first curved surface 1111 and the arc segment 211 may achieve an interference fit. When the trimmed lens 21 is mounted on the first annular mounting surface 111, an interference fit between the arc segment 211 of the trimmed lens 21 and the first curved surface 1111 of the first annular mounting surface 111 is achieved to implement the mounting, thereby reducing a contact area between the trimmed lens 21 and the lens barrel 1, and reducing an assembly fitting stress between the lens barrel 1 and the trimmed lens 21. In addition, as long as the first annular mounting surface 111 ensures that the plurality of first curved surfaces 1111 can precisely fit into the arc segments 211 of the trimmed lens 21, manufacturing difficulty of the lens barrel 1 can be reduced, and a roundness fit between the first annular mounting surface 111 and the trimmed lens 21 can be easily ensured. After the plurality of lenses in the lens group 2 are combined and mounted, coaxiality can also be ensured. The four first curved surfaces 1111 fit the trimmed lens 21 having four trimmed edges, thereby improving assembly stability of the trimmed lens 21. When the trimmed lens 21 is mounted on one first annular mounting surface 111 of the lens barrel 1, along the radial direction of the lens barrel 1, a distance between the first trimmed surface 1112 of the first annular mounting surface 111 and the optical axis Q is greater than or equal to a distance between the line segment 212 of the trimmed lens 21 and the optical axis Q.

As shown in FIG. 5a, the inner wall 11 of the lens barrel 1 further includes a first bearing surface 1131 and a second bearing surface 1132. The first bearing surface 1131 is located at an end that is of the inner wall 11 and that is close to the object side. The first bearing surface 1131 is configured to axially abut against a first lens that is of the lens group 2 and that is close to the object side. Herein, the first bearing surface 1131 is a circular ring, and is configured to abut against the first trimmed lens 21 close to the object side along the optical axis Q. The second bearing surface 1132 is located between two first annular mounting surfaces 111. The second bearing surface 1132 is configured to axially abut against a surface that is of one lens in the lens group 2 and that faces toward the object side.

With continued reference to FIG. 5a, each first curved surface 1111 includes a first protrusion v1 protruding toward the optical axis Q of the lens group 2, and each first protrusion v1 has an apex arc configured to abut against the trimmed lens 21, that is, the first protrusion v1 is configured to abut against the arc segment 211 of the trimmed lens 21. The first protrusion v1 can further reduce a contact area between the first annular mounting surface 111 and the trimmed lens 21. For ease of illustration, a surface that is of the first protrusion v1 and that faces toward the optical axis Q in FIG. 5a is shown by shading.

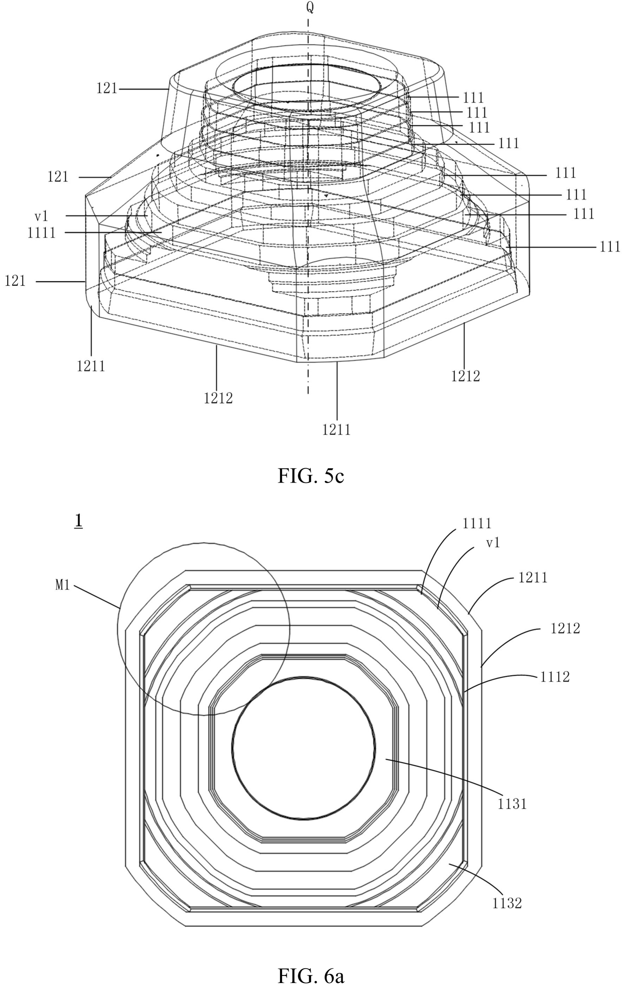

FIG. 5b and FIG. 5c are perspective views of the structure of the lens barrel 1 from different angles. Lines of the outer wall 12 of the lens barrel 1 are shown as solid lines, and lines of the inner wall 11 of the lens barrel 1 are shown as dashed lines. As shown in FIG. 5b, along the optical axis Q, the outer wall 12 of the lens barrel 1 includes a plurality of first annular surfaces 121. Different first annular surfaces 121 have different sizes in a radial direction perpendicular to the optical axis Q, so that the outer wall 12 of the lens 1 forms a stepped surface. Each first annular surface 121 includes four second curved surfaces 1211 and four second trimmed surfaces 1212. The four second curved surfaces 1211 and the four second trimmed surfaces 1212 are connected alternately to form an annular surface. One second trimmed surface 1212 is connected between any two adjacent second curved surfaces 1211, and one second curved surface 121 is connected between any two adjacent second trimmed surfaces 1212. In the inner wall 11 of the lens barrel 1, the plurality of first annular mounting surfaces 111 are sequentially arranged along the optical axis Q, and in a direction perpendicular to the optical axis Q, a projection of each first annular mounting surface 111 on the outer wall 12 falls on the first annular surface 121, to achieve a fit between a trimmed inner wall and a trimmed outer wall. In an embodiment, the first bearing surface 1131 is located on a side that is of a 1^{st} first annular mounting surface 111 at the top and that faces toward the object side, and the second bearing surface 1132 is located between two first annular mounting surfaces 111 at the bottom.

With continued reference to FIG. 5c, a first curved surface 1111 of each first annular mounting surface 111 corresponds to a second curved surface 1211 of the first annular surface 121, and a first trimmed surface 1112 of the first annular mounting surface 111 corresponds to a second trimmed surface 1212 of the first annular surface 121.

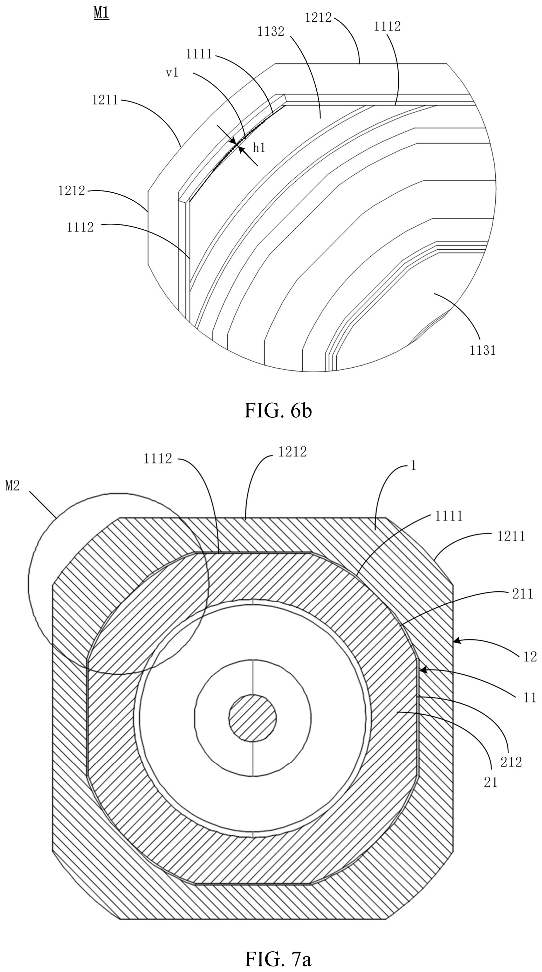

As shown in FIG. 6a, the structure of the lens barrel 1 is observed from an end that is of the lens barrel 1 and that is close to the image side along the optical axis Q. FIG. 6b is an enlarged view of details at M1 in FIG. 6a. With reference to FIG. 6a and FIG. 6b together, one of the first annular mounting surfaces 111 is used as an example. A dashed line is a circle in which the first curved surface 1111 is located. The first protrusion v1 protrudes toward a center of the lens barrel 1 in a direction perpendicular to the optical axis Q. The first protrusion v1 and the first curved surface 1111 have an integrated structure. Along a radial direction of the lens barrel 1, a maximum distance between the first protrusion v1 and the circle in which the first curved surface 1111 is located is h1. When the trimmed lens 21 is mounted on the first annular mounting surface 111, the first protrusion v1 abuts against the arc segment 211 of the trimmed lens 21. For ease of understanding, it may be considered that a portion that is of the first protrusion v1 and that is configured to abut against the arc segment 211 is a first abutting portion, and the first abutting portion may be in surface contact or point contact with the arc segment 211 of the trimmed lens 21.

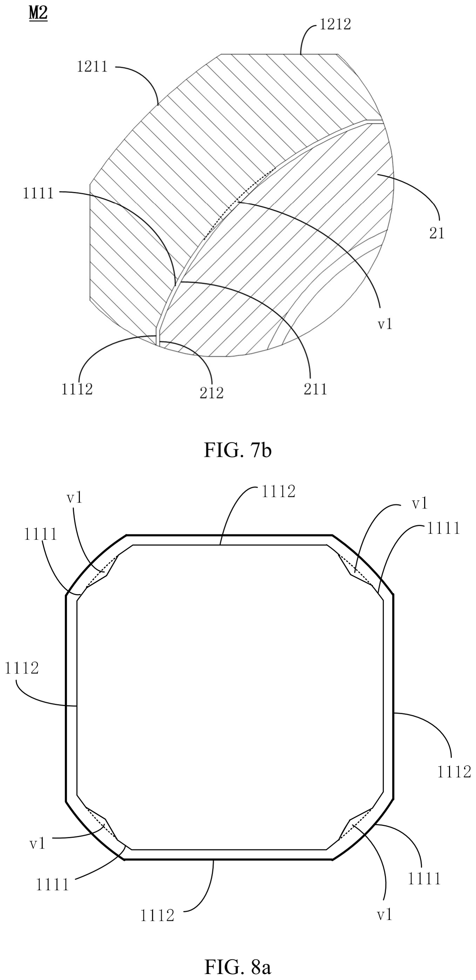

FIG. 7a is a diagram of a cross-sectional structure in which one of the first annular mounting surfaces 111 fits one trimmed lens 21. FIG. 7b is an enlarged view of details at M2 in FIG. 7a. As shown in FIG. 7a, the second curved surface 1211 of the outer wall 12 of the lens barrel 1 corresponds to the first curved surface 1111 of the inner wall 11 along a radial direction of the lens barrel 1, and the second trimmed surface 1212 corresponds to the first trimmed surface 1112. The first curved surface 1111 of the first annular mounting surface 111 is configured to abut against the arc segment 211 of the trimmed lens 21, to achieve a circumferential fit between the trimmed lens 21 and the lens barrel 1. There is a gap between the first trimmed surface 1112 and the line segment 212 of the trimmed lens 21. As shown in FIG. 7b, the first protrusion v1 is disposed on the first trimmed surface 1112, and the first protrusion v1 protrudes toward the trimmed lens 21 and abuts against the arc segment 211 of the trimmed lens 21. It may be considered that a position at which the first protrusion v1 abuts against the arc segment 211 is the first abutting portion. For the entire first annular mounting surface 111, the optical axis Q of the lens group 2 is used as a reference, and a distance between each first abutting portion and the optical axis Q is equivalent, to ensure that after the arc segment 211 of the trimmed lens 21 abuts against the first abutting portion, a center of the trimmed lens 21 coincides with the optical axis Q, thereby ensuring coaxiality. The trimmed lens 21 is circumferentially positioned by a plurality of first protrusions v1. This also facilitates molding modification of the lens barrel 1, improves production efficiency, and reduces production costs.

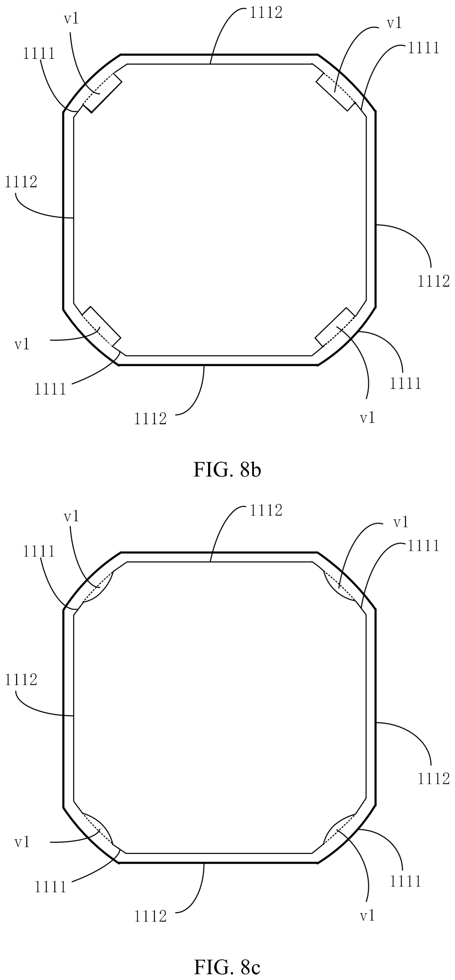

In the foregoing embodiment, a surface that is of the first protrusion v1 and that is configured to contact the trimmed lens 21 is a plane parallel to the optical axis Q, and the first abutting portion is in point contact with the arc segment 211 of the trimmed lens 211. The first protrusion v1 may alternatively be in another shape. The first protrusion v1 may alternatively be a triangular protrusion shown in FIG. 8a, or the first protrusion v1 may be a square protrusion shown in FIG. 8b, or the first protrusion v1 may be a cambered protrusion shown in FIG. 8c.

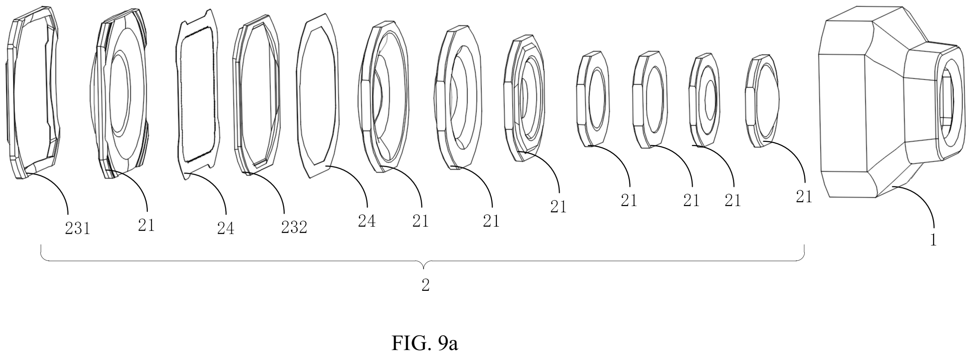

The inner wall 11 of the lens barrel 1 of the lens assembly 10 provided in this embodiment of this application includes a plurality of first annular mounting surfaces 111, and each first annular mounting surface 111 is configured to mount one trimmed lens 21. FIG. 9a shows an exploded view of the lens assembly 10. The lens group 2 correspondingly includes at least one trimmed lens 21. A shape of each trimmed lens 21 is similar to a structure of the trimmed lens 21 shown in FIG. 3a, and each trimmed lens 21 has an arc segment 211 and a line segment 212. In an example in FIG. 9a, the lens group 2 includes a plurality of trimmed lenses 21, and an arrangement position relationship of the plurality of trimmed lenses 21 is a stacking position relationship obtained after the plurality of trimmed lenses 21 are mounted. The lens group 2 further includes a first pressing ring 231. The first pressing ring 231 is fastened to the lens barrel 1 and can position at least one trimmed lens 21 along the optical axis Q on a side that is of the lens group 2 and that is close to the image side. In addition, the lens group 2 may further include a second pressing ring 232. The second pressing ring 232 is fastened to the lens barrel 1 and can position at least one trimmed lens 21 close to the object side along the optical axis Q. At least one trimmed lens 21 is arranged between the first pressing ring 231 and the second pressing ring 232. The lens group 2 may further include at least one soma film 24. When the lens group 2 and the lens barrel 1 are assembled, different specifications and quantities of soma films 24 may be selected for different specifications of trimmed lenses 21, so that a distance between two adjacent trimmed lenses 21 in the plurality of trimmed lens 21 can be adjusted. Alternatively, there may be a plurality of second pressing rings 232. Grouped positioning is performed for the lens group 2 by using a plurality of pressing rings including the first pressing ring 231 and at least one second pressing ring 232 fitted with the inner wall of the lens barrel 1, so that reliability of the lens assembly 10 can be improved.

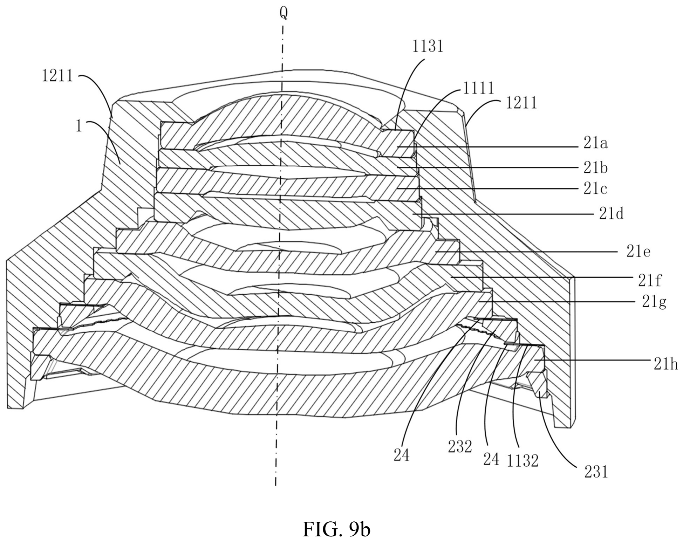

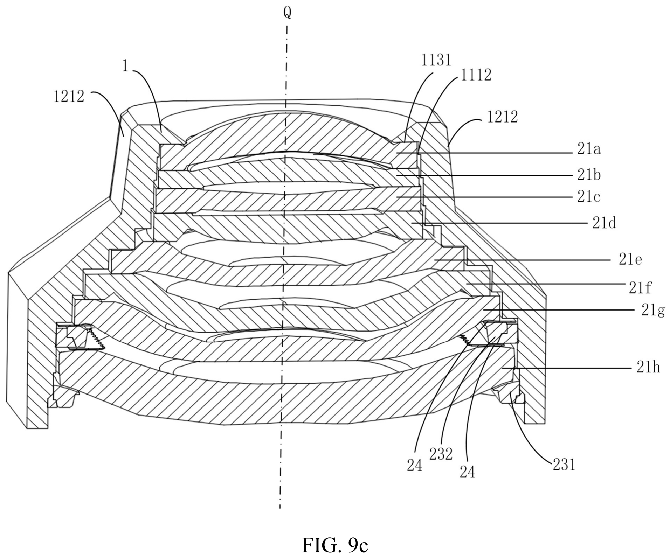

For a cross-sectional structure of the lens assembly 10, refer to FIG. 9b and FIG. 9c. One first annular mounting surface 111 is used as a reference. A cross section shown in FIG. 9b passes through two opposite first curved surfaces 1111, and a cross section shown in FIG. 9c passes through two opposite first trimmed surfaces 1112. With reference to FIG. 9b and FIG. 9c together, for example, the lens group 2 includes eight trimmed lenses 21, and each trimmed lens 21 is fastened to one first annular mounting surface 111 of the lens 1. Specifically, the trimmed lens 21 abuts against the first curved surface 1111 of the first annular mounting surface 111, and the first protrusion v1 on the first curved surface 1111 is not shown herein. There is a gap between the trimmed lens 21 and the first trimmed surface 1112 of the first annular mounting surface 111. The second bearing surface 1132 is located between the first bearing surface 1131 and the first pressing ring 231, and the second pressing ring 232 is located between the first bearing surface 1131 and the second bearing surface 1132. Seven trimmed lenses 21 close to the object side may be positioned and fixed along the optical axis Q between the first bearing surface 1131 and the second pressing ring 232, and one trimmed lens 21 close to the image side may be positioned and fixed along the optical axis Q between the second bearing surface 1132 and the first pressing ring 231.

Along a direction from the object side to the image side, that is, a top-down direction in FIG. 9b and FIG. 9c, the eight trimmed lenses 21 are respectively a trimmed lens 21a, a trimmed lens 21b, a trimmed lens 21c, a trimmed lens 21d, a trimmed lens 21e, a trimmed lens 21f, a trimmed lens 21g, and a trimmed lens 21h. The trimmed lens 21a, the trimmed lens 21b, the trimmed lens 21c, the trimmed lens 21d, the trimmed lens 21e, the trimmed lens 21f, and the trimmed lens 21g form one group, and are set as a first lens group. A side that is of the trimmed lens 21a and that faces toward the object side abuts against the first bearing surface 1131 of the lens barrel 1. A side that is of the trimmed lens 21g and that faces toward the image side is fixed by using the second pressing ring 232. A circumferential interference fit is achieved between the second pressing ring 232 and the inner wall 11. A surface that is of the second pressing ring 232 and that faces toward the object side presses against the trimmed lens 21g. For the first lens group including the trimmed lens 21b, the trimmed lens 21c, the trimmed lens 21d, the trimmed lens 21e, the trimmed lens 21f, and the trimmed lens 21g, each trimmed lens 21 is circumferentially fixed by using the first curved surface 1111 of the first annular mounting surface 111. The first trimmed lens 21a facing toward the object side axially abuts against the first bearing surface 1131 of the lens barrel 1 along the optical axis Q, and the first trimmed lens 21g facing toward the image side is fixed by using the second pressing ring 232. In other words, the entire first lens group may be positioned and fixed along the optical axis Q by using the first bearing surface 1131 and the second pressing ring 232. In the first lens group, one of any two adjacent trimmed lenses 21 that is close to the image side axially abuts against the one close to the object side, to implement axial assembly, thereby reducing a contact area between the lens and the lens barrel 1, and helping ensure coaxiality between the plurality of lenses. At least one soma film 24 is disposed between the first pressing ring 231 and the trimmed lens 21g, each soma film 24 is specifically located between two adjacent lenses, and the soma film 24 is configured to adjust a distance between the two adjacent lenses along the optical axis. The trimmed lens 21h may be considered as a second lens group, and a surface that is close to the object side along the optical axis Q may abut against the second bearing surface 1132. Alternatively, at least one soma film 24 may be disposed between the trimmed lens 21h and the second bearing surface 1132. The first pressing ring 231 achieves an interference fit with the inner wall 11 of the lens barrel 1, abuts against a surface that is of the trimmed lens 21h and that faces toward the image side, and axially fixes the trimmed lens 21h. The soma film 24 may be configured to adjust an axial distance between lenses. It should be understood that the second lens group may alternatively include a plurality of trimmed lenses 21. When the second lens group includes a plurality of trimmed lenses 21, and any two trimmed lenses 21 abut against each other, the entire second lens group may be positioned and fixed along the optical axis Q by using the second bearing surface 1132 and the first pressing ring 231.

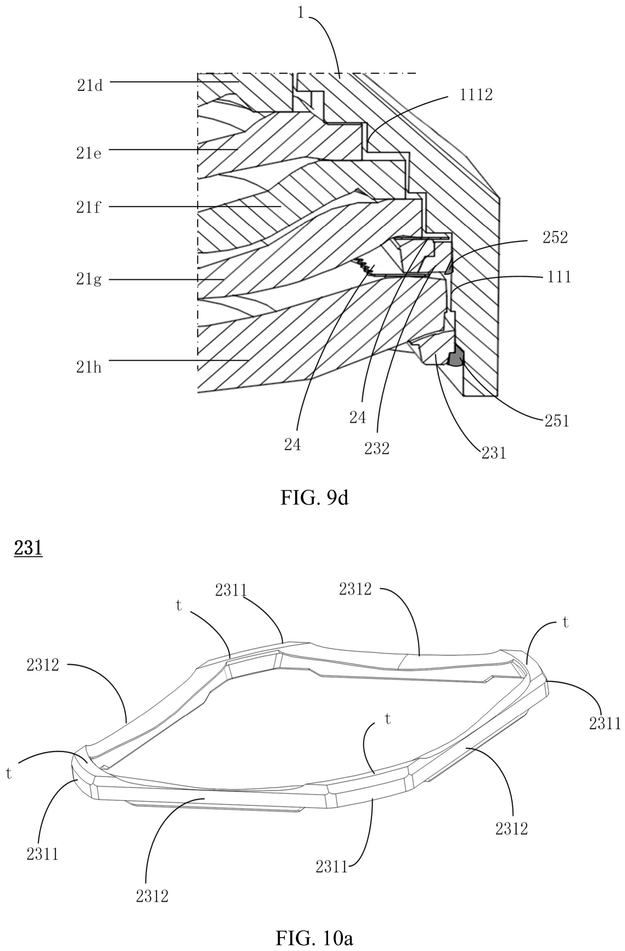

In some embodiments, based on the lens assembly 10 shown in FIG. 9c, as shown in a partial cross-sectional structure of the lens assembly 10 shown in FIG. 9d, the first pressing ring 231 may be fastened to the inner wall of the lens barrel 1 by using a first connector 251, and the second pressing ring 232 may be fastened to the inner wall of the lens barrel 1 by using a second connector 252. It may be considered that a plurality of circular lenses 22 included in the lens group 2 may be fixed relative to the lens barrel 1 by using the second pressing ring 232 fitted with the second connector 252, and one trimmed lens 21 included in the lens group 2 may be fixed relative to the lens barrel 1 by using the first pressing ring 231 fitted with the first connector 251. Herein, the first connector 251 and the second connector 252 are used as an example of a finally presented structure. The first connector 251 may be an adhesive, a bolt, a screw, a soldering material, or the like. The second connector 252 may also be an adhesive, a bolt, a screw, a soldering material, or the like. For example, the first connector 251 and the second connector 252 are adhesives. During assembly of the lens assembly 10, after the plurality of circular lenses 22 are assembled, the second pressing ring 232 is fastened to the inner wall of the lens barrel 1 by using an adhesive dispensing process, then the trimmed lens 21 is assembled, and the first pressing ring 231 is fastened to the inner wall of the lens barrel 1 by using an adhesive dispensing process. A structure formed after curing of the adhesives from the two adhesive dispensing processes is the first connector 251 and the second connector 252. Through the two adhesive dispensing processes, a combination of the lens group 2 and the lens barrel 1 has better stability and reliability and also helps improve optical performance of the lens group 2.

FIG. 10a is a structure of the first pressing ring 231. A shape of the first pressing ring 231 adapts to a shape of the trimmed lens 21. As shown in FIG. 10a, the first pressing ring 231 includes a plurality of arc portions 2311 and a plurality of arcuate portions 2312, and the plurality of arc portions 2311 and the plurality of arcuate portions 2312 are alternately connected to form an annular first pressing ring 231. For the plurality of trimmed lenses 21 in the lens group 2, the first pressing ring 231 is located on a side that is of the plurality of trimmed lenses 21 and that is close to the image side, and positions and fixes at least one trimmed lens 21 along the optical axis Q. When the first pressing ring 231 is fastened to the inner wall 11 of the lens barrel 1, the arc portion 2311 achieves an interference fit with a corner portion of the inner wall 11, and the arcuate portion 2312 of the arc portion 2311 achieves an interference fit with a planar portion of the inner wall 11. One first annular mounting surface 1111 of the inner wall 11 is used as a reference. The corner portion of the inner wall 11 is a location of the first curved surface 1111 of the first annular mounting surface 111, and the planar portion of the inner wall 1 is a location of the first trimmed surface 1112 of the first annular mounting surface 111. It should be noted that the arc portion 2311 protrudes toward one side of the trimmed lens 21 to form a reinforcing portion. The arc portion 2311 has a pressing surface t that is configured to abut against the arc segment 211 of the trimmed lens 21, and the arcuate portion 2312 connected between two arc portions 2311 is curved toward a side away from the trimmed lens 21 to form an arch. The arcuate portion 2312 can provide a thrust to the arc portion 2311 when the arcuate portion 2312 is deformed under pressure. Along a circumferential direction of the first pressing ring 231, a length of the arcuate portion 2312 is greater than a length of the arc portion 2311. If the arcuate portion 2312 is longer, the deformation under pressure is greater, and a larger thrust is provided for the arc portion 2311.

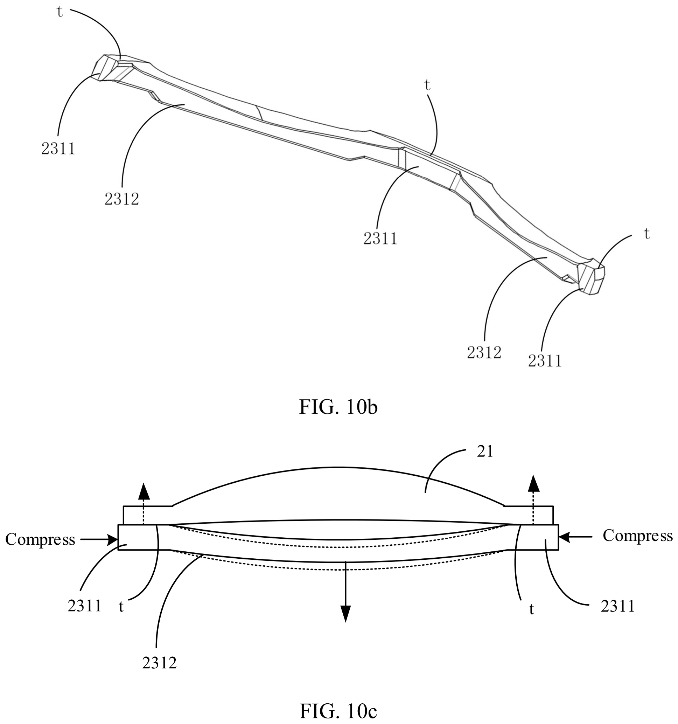

With reference to a diagram of a cross-sectional structure of the first pressing ring 231 shown in FIG. 10b, the cross section passes through two opposite arc portions 2311. As shown in FIG. 10b, an overall structure of each arcuate portion 2312 and the arc portions 2311 located at two ends of the arcuate portion 2312 is arch-shaped, a pressing surface t of the arc portion 2311 is configured to press against the arc segment 211 of the trimmed lens 21, and the arcuate portion 2312 protrudes toward the side away from the trimmed lens 21.

FIG. 10c is a structural diagram illustrating fitting between the first pressing ring 231 and one trimmed lens 21. As shown in FIG. 10c, when a circumferential interference fit is achieved between the first pressing ring 231 and the inner wall of the lens barrel 1, and the pressing surface t of the arc portion 2311 presses against the trimmed lens 21, the first pressing ring 231 is subject to circumferential compression by the lens barrel 1, and the arcuate portion 2312 is deformed, as shown by a solid arrow, toward the side away from the trimmed lens 21, and the deformed arcuate portion 2312 may be shown by a dashed line. The deformation of the arcuate portion 2312 exerts a force on the arc portions 2311 at both ends of the arcuate portion 2312, and the arc portions 2311 tend to move toward the trimmed lens 21, as shown by a dashed arrow, so that the pressing surface t has a preloading pressing effect on the trimmed lens 21. When the lens assembly 10 is subject to impact or vibration, a force exerted by the lens barrel 1 on the first pressing ring 231 may be absorbed by a deformation of the arcuate portion 2312, and the deformation of the arcuate portion 2312 has a preloading fastening effect on the trimmed lens 21 through the pressing surface t of the arc portion 2311, to further protect the trimmed lens 21 from being affected by the impact or vibration.

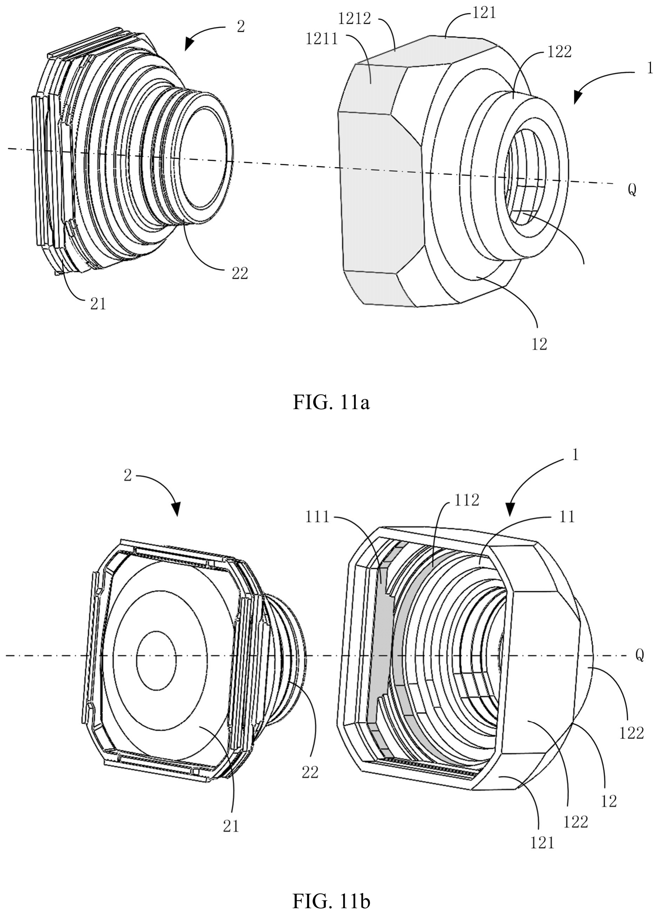

An embodiment of this application further provides a lens assembly 10, as shown in FIG. 11a and FIG. 11b. The lens assembly 10 includes a lens group 2 and a lens barrel 1. A difference from the foregoing embodiment lies in that the lens group 2 in the lens assembly 10 includes at least one circular lens 22 and at least one trimmed lens 21. Correspondingly, an inner wall 11 of the lens barrel 1 includes at least one first annular mounting surface 111 and at least one second annular mounting surface 112, and the plurality of second annular mounting surfaces 112 are located on a side that is of the first annular mounting surface 111 and that is close to an object side. Each first annular mounting surface 111 is configured to correspondingly assemble one trimmed lens 21. A structure and a fitting manner of the trimmed lens 21 and the first annular mounting surface 111 are similar to those in the solution in the foregoing embodiment, and details are not described herein again.

As shown in FIG. 11a, an outer wall 12 of the lens barrel 1 includes at least one first annular surface 121 and at least one second annular surface 122. For example, one first annular surface 121 is shown by shading. The first annular surface 121 includes a plurality of second curved surfaces 1211 and a plurality of second trimmed surfaces 1212, and the plurality of second curved surfaces 1211 and the plurality of second trimmed surfaces 1212 are alternately connected around an optical axis Q. A shape of the first annular surface 121 is similar to that of the first annular surface 121 in the foregoing embodiment, and details are not described herein again. The second annular surface 122 is rotationally symmetric around the optical axis Q.

For example, the inner wall 11 of the lens barrel 1 includes one first annular mounting surface 111 and a plurality of second annular mounting surfaces 112. In FIG. 11b, the first annular mounting surface 111 and one of the second annular mounting surfaces 112 are respectively shown by shading. The second annular mounting surface 112 is configured to circumferentially assemble a circular lens 22 in the lens group 2. Each second annular mounting surface 112 is rotationally symmetric around the optical axis Q. Specifically, when the inner wall 11 includes a plurality of second annular mounting surfaces 112, the plurality of second annular mounting surfaces 112 are sequentially arranged along the optical axis Q. Each second annular mounting surface 112 may be configured to mount one circular lens 22 in the lens group 2.

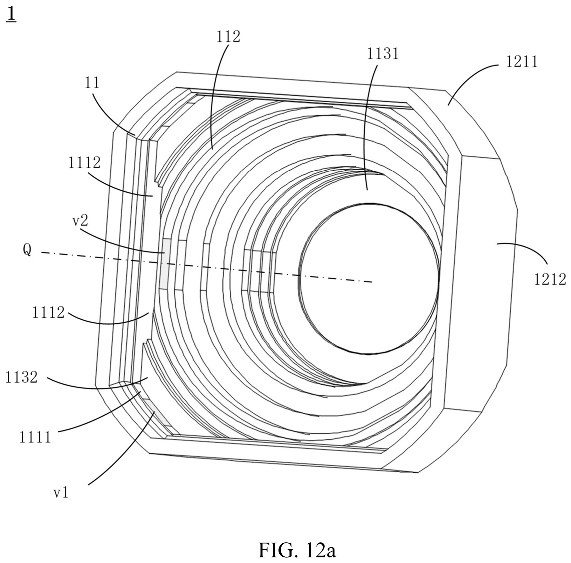

FIG. 12a is a diagram of a structure of the lens barrel 1. An interior of the lens barrel 1 may be observed from a side that is of the lens barrel 1 and that faces toward an image side. As shown in FIG. 12a, the inner wall 11 of the lens barrel 1 includes a first annular mounting surface 111 and a plurality of second annular mounting surfaces 112. The first annular mounting surface 111 is located on a side that is of the lens barrel 1 and that is close to the image side, and the plurality of second annular mounting surfaces 112 are located on a side that is of the lens barrel 1 and that is close to the object side. Each first annular mounting surface 111 includes a plurality of first curved surfaces 1111 and a plurality of first trimmed surfaces 1112, and the plurality of first curved surfaces 1111 and the plurality of first trimmed surfaces 1112 are alternately connected around the optical axis Q. A distance between any position of the first curved surface 1111 and the optical axis Q of the lens group 2 is not less than a distance between any position of the first trimmed surface 1112 and the optical axis Q. Along a direction perpendicular to the optical axis Q of the lens group 2, a projection of any first annular mounting surface 111 on the outer wall 12 of the lens barrel 1 is located on the first annular surface 121, the first curved surface 1111 corresponds to the second curved surface 1211, and the first trimmed surface 1112 corresponds to the second trimmed surface 1212. Therefore, a shape of the first annular mounting surface 111 of the lens barrel 1 can adapt to the shape of the first annular surface 121, so that wall thicknesses of the lens barrel 1 are approximately equal. During manufacturing of the lens barrel 1, the inner wall 11 and the outer wall 12 of the lens barrel 1 can maintain approximately equal shrinkage rates, to help ensure roundness of the first annular mounting surface 111 of the lens barrel 1.

As shown in FIG. 12a, the inner wall 11 of the lens barrel 1 further includes a first bearing surface 1131 and a second bearing surface 1132. The first bearing surface 1131 is located at an end that is of the inner wall 11 and that is close to the object side. The first bearing surface 1131 is configured to axially abut against a first lens that is of the lens group 2 and that is close to the object side. Herein, the first bearing surface 1131 is a circular ring, and is configured to abut against a first circular lens 22 close to the object side along the optical axis Q. The second bearing surface 1132 is located between a first annular mounting surface 111 and a second annular mounting surface 112 that are adjacent. The second bearing surface 1132 is configured to axially abut against a surface that is of the trimmed lens 21 in the lens group 2 and that faces toward the object side.

With continued reference to FIG. 12a, in each first annular mounting surface 111, the first curved surface 1111 includes a first protrusion v1 protruding toward the optical axis Q of the lens group 2, and each first protrusion v1 has an apex arc configured to abut against the trimmed lens 21, that is, the first protrusion v1 is configured to abut against an arc segment 211 of the trimmed lens 21. Structures of the first annular mounting surface 111 and the trimmed lens 21 are described in detail in the foregoing embodiment, and details are not described herein again. Each second annular mounting surface 112 includes at least three second protrusions v2, and each second protrusion v2 is configured to assemble and fix the circular lens 22 along a circumferential direction of the circular lens 22. For example, there may be three second protrusions v2. In the field of geometry, three points can determine a circle. Therefore, the three second protrusions v2 can determine the second annular mounting surface 112, and can also determine the circular lens 22 matching the second annular mounting surface 112. When the circular lens 22 is mounted on the second annular mounting surface 112, a circumferential edge of the circular lens 22 circumferentially fits into the plurality of second protrusions v2 of the second annular mounting surface 112 to implement the mounting, thereby reducing a contact area between the circular lens 22 and the lens barrel 1, and reducing an assembly fitting stress between the lens barrel 1 and the circular lens 22. In addition, as long as the second annular mounting surface 112 ensures that the second protrusions v2 can precisely fit into the arc segments 211 of the circular lens 22, manufacturing difficulty of the lens barrel 1 can be reduced, and a roundness fit between the second annular mounting surface 112 and the circular lens 22 can be easily ensured. After a plurality of lenses in the lens group 2 are combined and mounted, coaxiality can also be ensured. For ease of understanding, in FIG. 12a, a surface that is of the first protrusion v1 and that faces toward the optical axis Q and a surface that is of the second protrusion v2 and that faces toward the optical axis Q are shown by shading.

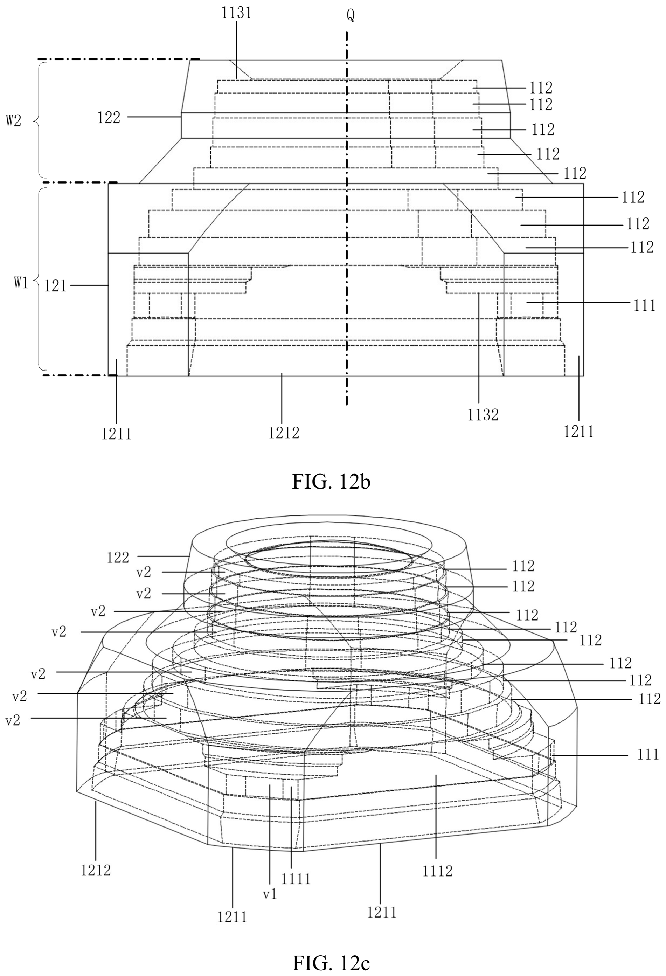

FIG. 12b and FIG. 12c are perspective views of the structure of the lens barrel 1 from different angles. Lines of the outer wall 12 of the lens barrel 1 are shown as solid lines, and lines of the inner wall 11 of the lens barrel 1 are shown as dashed lines. As shown in FIG. 12b, along the optical axis Q, the lens barrel 1 is divided into a W1 segment and a W2 segment. The W1 segment is close to the object side, and the W2 segment is close to the image side. On the outer wall 12 of the lens barrel 1, the first annular surface 121 is distributed in the W1 segment, the second annular surface 122 is distributed in the W2 segment, and a stepped surface is formed between the W1 segment and the W2 segment. In a direction perpendicular to the optical axis Q, a radial size of the W1 segment is greater than a radial size of the W2 segment. On the inner wall 11 of the lens barrel 1, the first annular mounting surface 111 is distributed in the W1 segment, and the second annular mounting surface 112 is partially distributed in the W1 segment and partially distributed in the W2 segment. In other words, in a direction perpendicular to the optical axis Q, a projection of the first annular mounting surface 111 on the outer wall 12 falls on the first annular surface 121, to achieve a fit between a trimmed inner wall and a trimmed outer wall. A projection of a part of the second annular mounting surface 112 on the outer wall 12 falls on the second annular surface 122, to achieve a fit between a circular inner wall and a circular outer wall. A projection of a part of the second annular mounting surface 112 on the outer wall 12 falls on the first annular surface 121, to achieve a fit between a circular inner wall and a trimmed inner wall. The first bearing surface 1131 is located on a side that is of a 1^{st} second annular mounting surface 112 at the top and that faces toward the object side, and the second bearing surface 1132 is located between a first annular mounting surface 111 and a second annular mounting surface 112 that are adjacent.

With continued reference to FIG. 12c, for example, three second protrusions v2 are disposed on each second annular mounting surface 112, and second protrusions v2 of the plurality of second annular mounting surfaces 112 sequentially correspond to each other along the optical axis Q. A first curved surface 1111 of the first annular mounting surface 111 corresponds to a second curved surface 1211 of the first annular surface 121, and a first trimmed surface 1112 of the first annular mounting surface 111 corresponds to a second trimmed surface 1212 of the first annular surface 121.

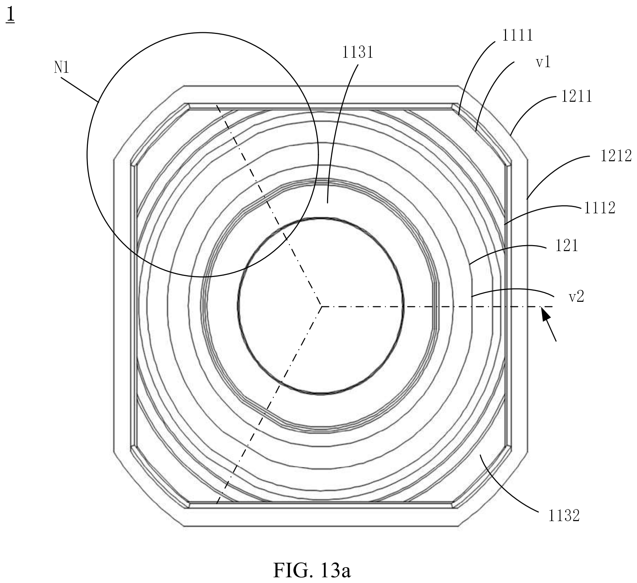

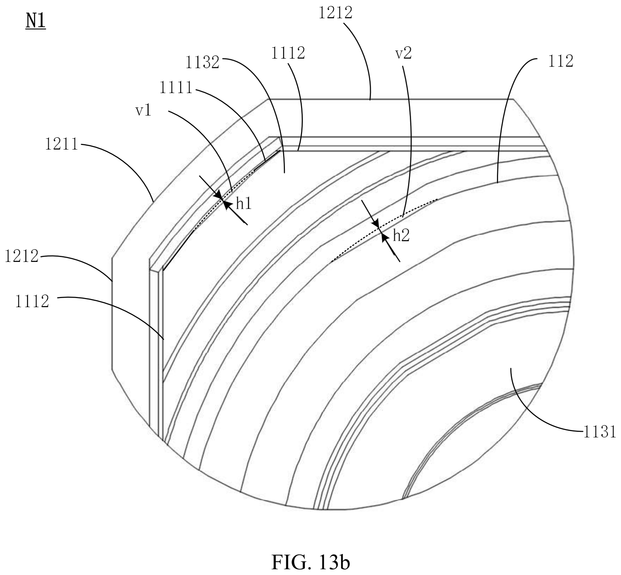

As shown in FIG. 13a, the structure of the lens barrel 1 is observed from an end that is of the lens barrel 1 and that is close to the image side along the optical axis Q. FIG. 13b is an enlarged view of details at N1 in FIG. 13a. With reference to FIG. 13a and FIG. 13b together, a dashed line on the first annular mounting surface 111 is a circle in which the first curved surface 1111 is located. The first protrusion v1 protrudes toward a center of the lens barrel 1 in a direction perpendicular to the optical axis Q. The first protrusion v1 and the first curved surface 1111 have an integrated structure. Along a radial direction of the lens barrel 1, a maximum distance between the first protrusion v1 and the circle in which the first curved surface 1111 is located is h1. When the trimmed lens 21 is mounted on the first annular mounting surface 111, the first protrusion v1 abuts against the arc segment 211 of the trimmed lens 21. For ease of understanding, it may be considered that a portion that is of the first protrusion v1 and that is configured to abut against the arc segment 211 is a first abutting portion, and the first abutting portion may be in surface contact or point contact with the arc segment 211 of the trimmed lens 21. A dashed line on the second annular mounting surface 112 is a circle in which the second annular mounting surface 112 is located. The second protrusion v2 protrudes toward the center of the lens barrel 1 in a direction perpendicular to the optical axis Q, and the second protrusion v2 and the second annular mounting surface 112 have an integrated structure. Along a radial direction of the lens barrel 1, a maximum distance between the second protrusion v2 and the circle in which the second annular mounting surface 112 is located is h2. When the circular lens 22 is mounted on the second annular mounting surface 112, the second protrusion v2 abuts against the circular lens 22. For ease of understanding, it may be considered that a portion that is of the second protrusion v2 and that is configured to abut against the circular lens 22 is a second abutting portion, and the second abutting portion may be in surface contact or point contact with the circular lens 22. In a direction perpendicular to the optical axis Q, a distance between each second abutting portion and the optical axis Q is equal, to ensure that the three second protrusions v2 can determine a circle whose center is on the optical axis Q.

In the example in FIG. 13a, the three second protrusions v2 are uniformly distributed around the optical axis Q, the three second protrusions v2 are distributed in a form of an equilateral triangle, and three dashed lines respectively indicate locations of central axes of the three second protrusions v2. A surface that is of one second protrusion v2 and that faces toward the center of the lens barrel 1 remains parallel to one of the first trimmed surfaces 1112. A central axis of the second protrusion v2 is collinear with a central axis of the first trimmed surface 1112, the central axis is a dashed line indicated by an arrow, the second protrusion v2 is axisymmetric about the central axis, and the first trimmed surface 1112 is also axisymmetric about the central axis. During manufacturing of the lens barrel 1, the second protrusion v2 and the first trimmed surface 1112 may be used as reference bases for manufacturing, to reduce production difficulty.

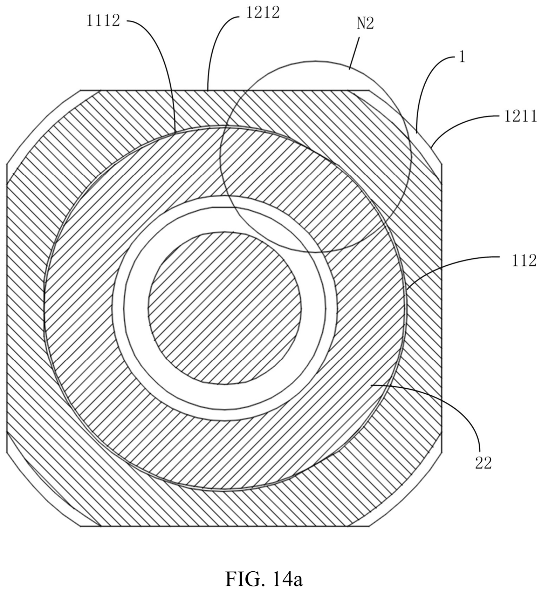

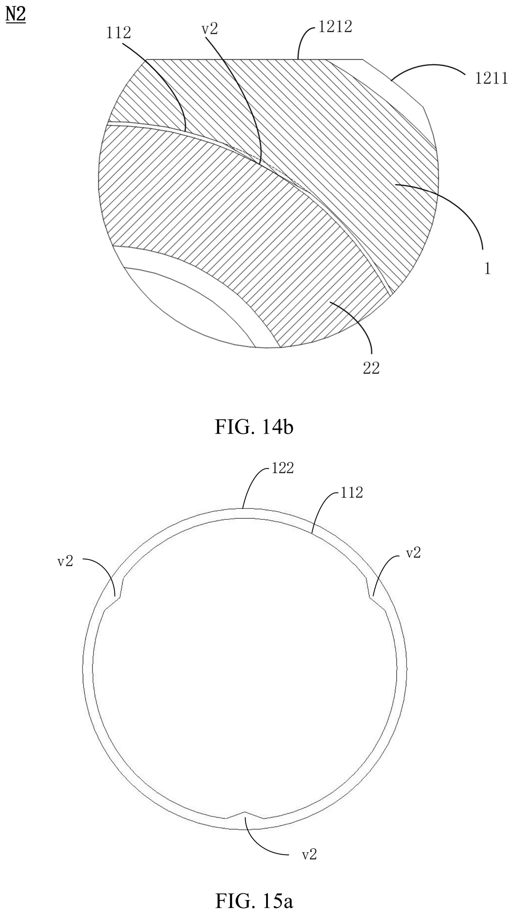

FIG. 14a is a diagram of a cross-sectional structure in which one second annular mounting surface 112 fits one circular lens 22. FIG. 14b is an enlarged view of details at N2 in FIG. 14a. A cross section shown in FIG. 14a is a combination of the trimmed outer wall and the circular inner wall. The second annular mounting surface 112 partially abuts against the circular lens 22 circumferentially to achieve a circumferential fit between the circular lens 22 and the lens barrel 1. There is a gap between the second annular mounting surface 112 and the circular lens 22. As shown in FIG. 14b, the second protrusion v2 protrudes toward the circular lens 22 and abuts against the circular lens 22. It may be considered that a position at which the second protrusion v2 abuts against the circular lens 22 is the second abutting portion. For the entire second annular mounting surface 112, the optical axis Q of the lens group 2 is used as a reference, and a distance between each second abutting portion and the optical axis Q is equivalent, to ensure that after the circular lens 22 abuts against the second abutting portion, a center of the circular lens 22 coincides with the optical axis Q, thereby ensuring coaxiality.

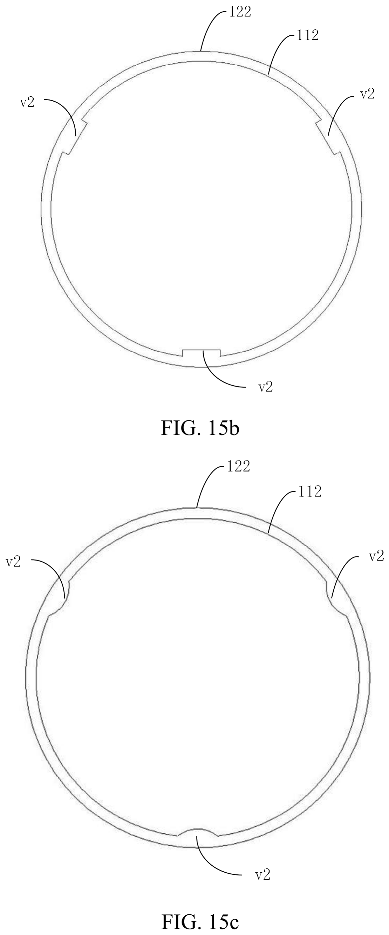

In the foregoing embodiment, a surface that is of the second protrusion v2 and that is configured to contact the circular lens 22 is a plane parallel to the optical axis Q, and the second abutting portion is in point contact with the circular lens 22. The second protrusion v2 may alternatively be in another shape. A combination of a circular inner wall and a circular outer wall is used as an example. The second protrusion v2 may alternatively be a triangular protrusion shown in FIG. 15a, or the second protrusion v2 may be a square protrusion shown in FIG. 15b, or the second protrusion v2 may be a cambered protrusion shown in FIG. 15c.

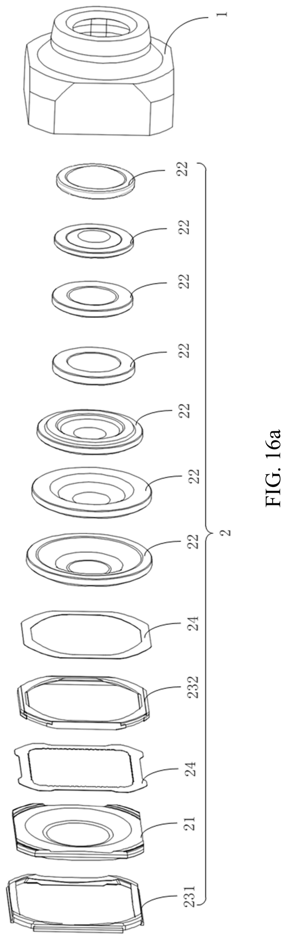

The inner wall 11 of the lens barrel 1 of the lens assembly 10 provided in this embodiment of this application includes one first annular mounting surface 111 and a plurality of second annular mounting surfaces 112. The first annular mounting surface 111 is configured to mount one trimmed lens 21, and each second annular mounting surface 112 is configured to mount one circular lens 22. FIG. 16a shows an exploded view of the lens assembly 10. The plurality of lenses included in the lens group 2 are one trimmed lens 21 and a plurality of circular lenses 22 respectively. A shape of the trimmed lens 21 is similar to a structure of the trimmed lens 21 shown in FIG. 3a, and each trimmed lens 21 has an arc segment 211 and a line segment 212. An arrangement position relationship between the plurality of lenses in the lens group 2 is a stacking position relationship obtained after the plurality of circular lenses 22 and one trimmed lens 21 shown in FIG. 16a are mounted. The lens group 2 further includes a first pressing ring 231 and a second pressing ring 232. The first pressing ring 231 is fastened to the lens barrel 1 and can position the trimmed lens 21 along the optical axis Q on a side that is of the lens group 2 and that is close to the image side. The second pressing ring 232 is fastened to the lens barrel 1 and can position the circular lens 22 along the optical axis Q on a side that is of the plurality of circular lenses 22 and that is close to the image side. The lens group 2 may further include at least one soma film 24, and the soma film 24 is configured to adjust a distance between two adjacent lenses in the plurality of lenses.

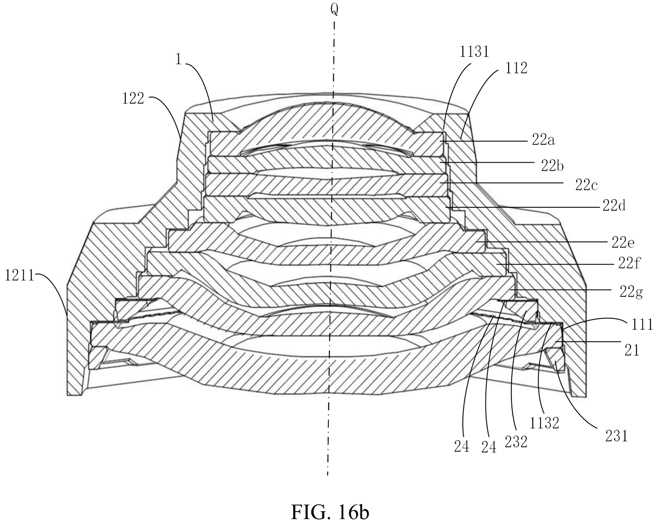

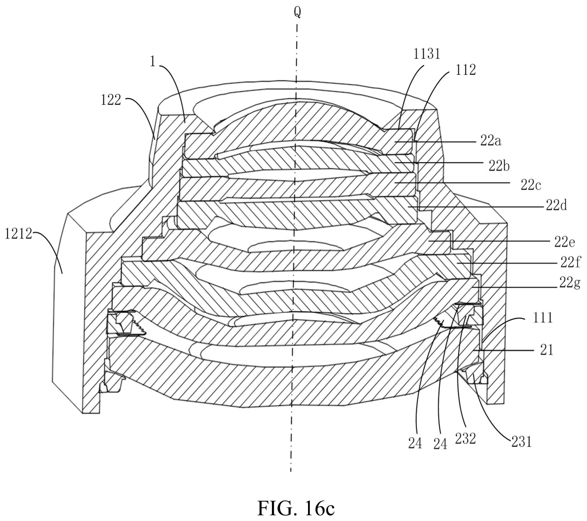

For a cross-sectional structure of the lens assembly 10, refer to FIG. 16b and FIG. 16c. A cross section shown in FIG. 16b passes through two opposite second trimmed surfaces 1212, and a cross section shown in FIG. 16c passes through two opposite second curved surfaces 1211. For example, the lens group 2 includes seven circular lenses 22 and one trimmed lens 21. A circumferential edge of the trimmed lens 21 is fastened to the first annular mounting surface 111 of the lens barrel 1, and a circumferential edge of each circular lens 22 is fastened to one second annular mounting surface 112 of the lens barrel 1. Specifically, the trimmed lens 21 abuts against and is fastened to the first curved surface 1111 of the first annular mounting surface 111. Details are described in the foregoing embodiment, and are not described herein again. The second bearing surface 1132 is located between the first bearing surface 1131 and the first pressing ring 231, and the second pressing ring 232 is located between the first bearing surface 1131 and the second bearing surface 1132. The seven circular lenses 22 may be positioned and fixed along the optical axis Q between the first bearing surface 1131 and the second pressing ring 232, and the one trimmed lens 21 may be positioned and fixed along the optical axis Q between the second bearing surface 1132 and the first pressing ring 231.

Along a direction from the object side to the image side, that is, a top-down direction in FIG. 16b and FIG. 16c, the seven circular lenses 22 are respectively a circular lens 22a, a circular lens 22b, a circular lens 22c, a circular lens 22d, a circular lens 22e, a circular lens 22f, and a circular lens 22g. A side that is of the circular lens 22a and that faces toward the object side abuts against the first bearing surface 1131 of the lens barrel 1. A side that is of the circular lens 22g and that faces toward the image side is fixed by using the second pressing ring 232. A circumferential interference fit is achieved between the second pressing ring 232 and the inner wall 11. A surface that is of the second pressing ring 232 and that faces toward the object side presses against the circular lens 22g. For the seven circular lenses 22, the seven circular lenses 22 may be considered as a first lens group. Each circular lens 22 is circumferentially fixed by using the second annular mounting surface 112. The first circular lens 22a facing toward the object side axially abuts against the first bearing surface 1131 of the lens barrel 1 along the optical axis Q. The first circular lens 22g facing toward the image side is fixed by using the second pressing ring 232. In other words, the entire first lens group may be positioned and fixed along the optical axis Q by using the first bearing surface 1131 and the second pressing ring 232. In the first lens group, one of any two adjacent circular lenses 22 that is close to the image side axially abuts against the one close to the object side, to implement axial assembly, thereby reducing a contact area between the circular lens 22 and the lens barrel 1, and helping ensure coaxiality between the plurality of circular lenses 22. At least one soma film 24 is disposed between the first pressing ring 231 and the circular lens 22g. The trimmed lens 21 may be considered as a second lens group, and a surface that is close to the object side along the optical axis Q may abut against the second bearing surface 1132. Alternatively, at least one soma film 24 may be disposed between the trimmed lens 21 and the second bearing surface 1132. The first pressing ring 231 achieves an interference fit with the inner wall 11 of the lens barrel 1, abuts against a surface that is of the trimmed lens 21 and that faces toward the image side, and axially fixes the trimmed lens 21. The soma film 24 may be configured to adjust an axial distance between lenses. For assembly of the first pressing ring 231 and the trimmed lens 21, refer to FIG. 10a to FIG. 10c. Details are not described herein again. It should be understood that the second lens group may alternatively include a plurality of trimmed lenses 21. When the second lens group includes a plurality of trimmed lenses 21, and any two trimmed lenses 21 abut against each other, the entire second lens group may be positioned and fixed along the optical axis Q by using the second bearing surface 1132 and the first pressing ring 231.

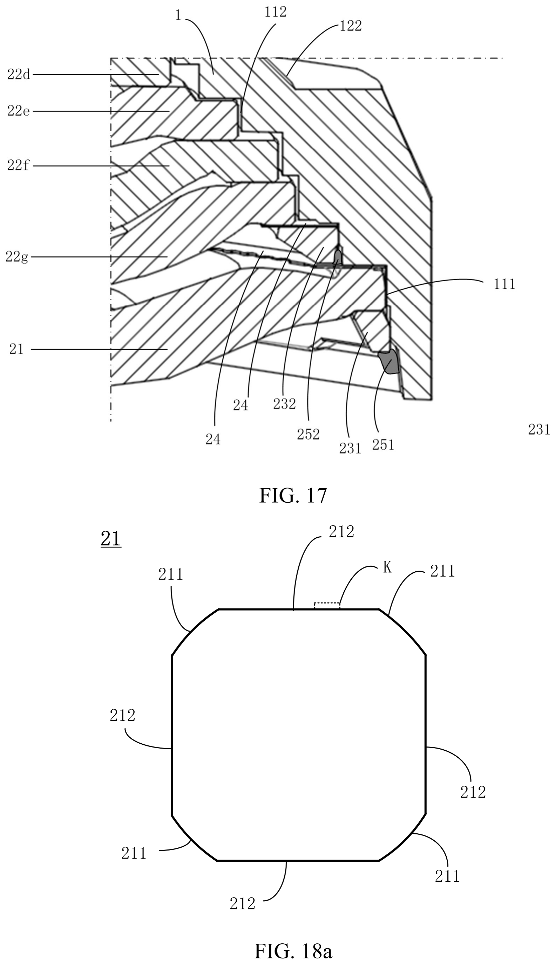

In some embodiments, based on the lens assembly 10 shown in FIG. 16b, as shown in a diagram of a partial cross-sectional structure of the lens assembly 10 shown in FIG. 17, the first pressing ring 231 may be fastened to the inner wall of the lens barrel 1 by using a first connector 251, and the second pressing ring 232 may be fastened to the inner wall of the lens barrel 1 by using a second connector 252. It may be considered that the plurality of circular lenses 22 included in the lens group 2 may be fixed relative to the lens barrel 1 by using the second pressing ring 232 fitted with the second connector 252, and one trimmed lens 21 included in the lens group 2 may be fixed relative to the lens barrel 1 by using the first pressing ring 231 fitted with the first connector 251. Herein, the first connector 251 and the second connector 252 are used as an example of a finally presented structure. The first connector 251 may be an adhesive, a bolt, a screw, a soldering material, or the like. The second connector 252 may also be an adhesive, a bolt, a screw, a soldering material, or the like. For example, the first connector 251 and the second connector 252 are adhesives. During assembly of the lens assembly 10, after the plurality of circular lenses 22 are assembled, the second pressing ring 232 is fastened to the inner wall of the lens barrel 1 by using an adhesive dispensing process, then the trimmed lens 21 is assembled, and the first pressing ring 231 is fastened to the inner wall of the lens barrel 1 by using an adhesive dispensing process. A structure formed after curing of the adhesives from the two adhesive dispensing processes is the first connector 251 and the second connector 252. Through the two adhesive dispensing processes, a combination of the lens group 2 and the lens barrel 1 has better stability and reliability and also helps improve optical performance of the lens group 2.

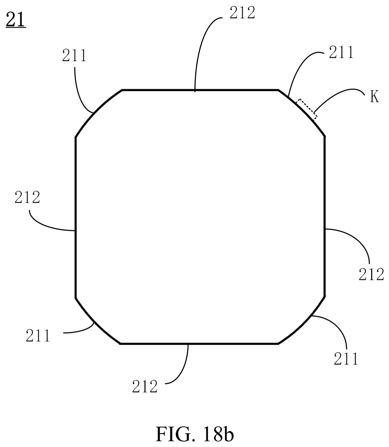

In some embodiments, the trimmed lens 21 is an injection-molded body, and may be obtained by using an injection molding process. During injection molding, a liquid material of the trimmed lens 21 is injected into a specified mold, and a solid raw material used to form the trimmed lens 21 may be obtained after the liquid is cooled and solidified. The raw material still has a structure formed by a residual material at an injection gate position during injection molding, and the trimmed lens 21 can be obtained only after the residual structure at the injection gate is removed. The injection gate of the trimmed lens 21 in this embodiment of this application during injection molding may be located in the arc segment 211, or may be located in the line segment 212. In other words, the injection gate of the trimmed lens 21 is located at a circumferential edge of the trimmed lens 21. FIG. 18a shows an example of a trimmed lens 21 with an injection gate K located in a line segment 212, and FIG. 18b shows an example of a trimmed lens 21 with an injection gate K located in an arc segment 212. It should be understood that, after the trimmed lens 21 is injected and manufactured, the residual material at the injection gate K needs to be removed. Therefore, a position of the injection gate K during injection molding of the trimmed lens 21 herein is shown by using a dashed line.

Possibly, when the injection gate of the trimmed lens 21 is located in one of corner arcs, that is, when the injection gate is located in the arc segment 211, along a circumferential direction of the trimmed lens 21, a circumferential size of the injection gate is less than a circumferential size of the arc segment 211. When the injection molding is completed and the injection gate structure formed at the injection gate is cut off, at least a part of the arc shape of the arc segment 211 is retained.

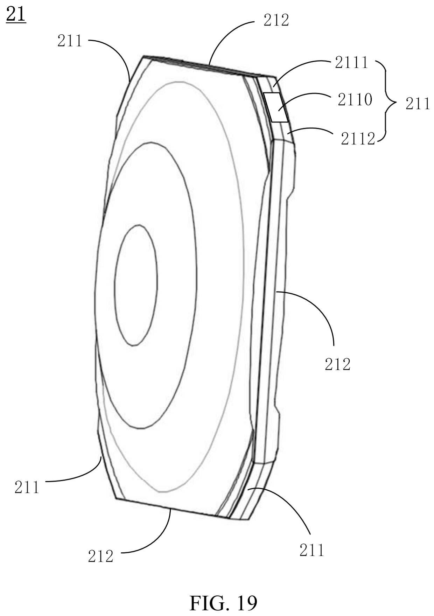

FIG. 19 shows a trimmed lens 21. At least one corner arc of the trimmed lens 21 includes a side trimmed surface 2110, that is, the arc segment 211 includes a side trimmed surface 2110. Along a circumferential direction of the trimmed lens 21, a circumferential size of the side trimmed surface 2110 is less than a circumferential size of the corner arc, to ensure that the arc segment 211 can fit into the first annular mounting surface 111 of the lens barrel 1. In some embodiments, the corner arc includes a first curved sub-surface 2111 and a second curved sub-surface 2112, and the first curved sub-surface 2111 and the second curved sub-surface 2112 are respectively located on two sides of the side trimmed surface 2110. In this case, an increase in a quantity of trimmed edges of the trimmed lens 21, together with further adjustment of the lens barrel 1, may further reduce a size of the lens barrel 1.

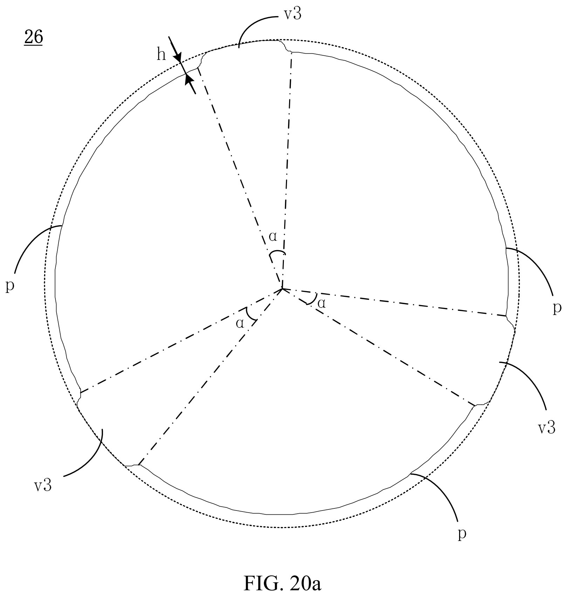

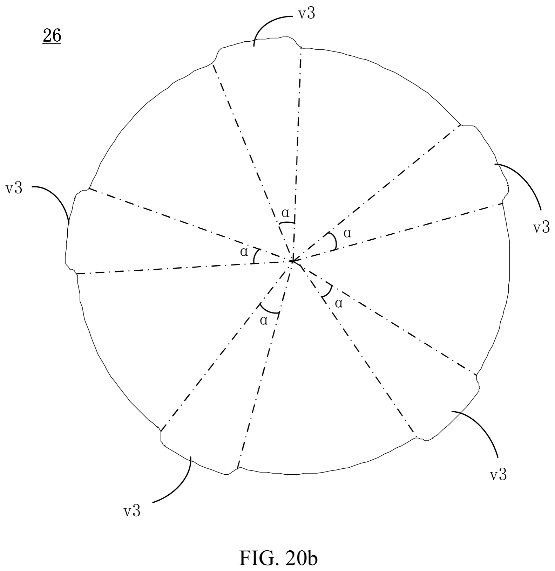

In some embodiments, the lens group 2 may further include at least one quasi-circular lens 26. For a structure of the quasi-circular lens 26, refer to FIG. 20a and FIG. 20b. As shown in FIG. 20a and FIG. 20b, a circumferential edge of the quasi-circular lens 26 includes at least three lens protrusions v3, and each lens protrusion v3 is configured to abut against the inner wall of the lens barrel 1, so that the quasi-circular lens 26 is mounted on a circular inner wall of the lens barrel 1.

Specifically, outer circumferential surfaces of the three lens protrusions v3 are curved surfaces, and each lens protrusion v3 is configured to contact a curved surface of the inner wall of the lens barrel 1. In a conventional assembly manner in which a circular lens is assembled on a circular inner wall of a lens barrel, a radial size of an outer circumferential surface of the circular lens is within a range of 1 µm to 2 µm. When the circular lens is assembled on the circular inner wall of the lens barrel, a contact position between an outer circumferential surface of the circular lens and the inner wall of the lens barrel is uncertain, and a position at which the circular lens is compressed by the inner wall of the lens barrel by using the contact position is uncertain. Consequently, a surface shape change that occurs when the circular lens is compressed is unpredictable, and optical performance of the circular lens is affected. According to the quasi-circular lens 26 provided in this embodiment of this application, a height h of the lens protrusion v3 protruding from an edge of the quasi-circular lens 26 is within a range of 10 µm to 50 µm, which is far greater than a radial size range of the outer circumferential surface of the circular lens. When the quasi-circular lens 26 is assembled on a circular inner wall of the lens barrel, the quasi-circular lens 26 abuts against and is fastened to the circular inner wall of the lens barrel 1 in a manner of curved surface contact by using a plurality of lens protrusions v3. A contact position between each lens protrusion v3 and a curved surface of the circular inner wall of the lens barrel 1 is controllable. Shapes and distribution ranges of the at least three lens protrusions v3 are set, so that a deformation of the quasi-circular lens 26 compressed by the inner wall of the lens barrel 1 can be controlled. This helps a surface shape in an effective optical range of the quasi-circular lens 26 approach a rotationally symmetric shape, and can improve optical performance of the quasi-circular lens 26.

For example, the quasi-circular lens 26 shown in FIG. 20a may be formed by designing notches p on a base circle shown by a dashed line. A lens protrusion v3 is formed between any two notches p, a curved surface of an outer circumferential surface of each lens protrusion v3 is located on the base circle shown by the dashed line, radii of curved surfaces of all lens protrusions v3 are the same, and each lens protrusion v3 may be assembled on a circular inner wall of the lens barrel 1 in a manner of curved surface contact.

A central angle α corresponding to any lens protrusion v3 is within a range of 10° to 60°. Different lens protrusions v3 may correspond to different specific central angles α.

For example, the quasi-circular lens 26 has three lens protrusions v3 distributed at intervals along a circumferential direction of the lens. A central angle α corresponding to any lens protrusion v3 is within a range of 10° to 60°. A central angle corresponding to an arc between positions that are of the three lens protrusions v3 and that are configured to abut against the inner wall 11 is greater than 180°. Different lens protrusions v3 may correspond to different specific central angles α.

FIG. 20b shows five lens protrusions v3. Along the circumferential direction of the quasi-circular lens, a sum of central angles α corresponding to all lens protrusions v3 is within an angle range of 30° to 180°.

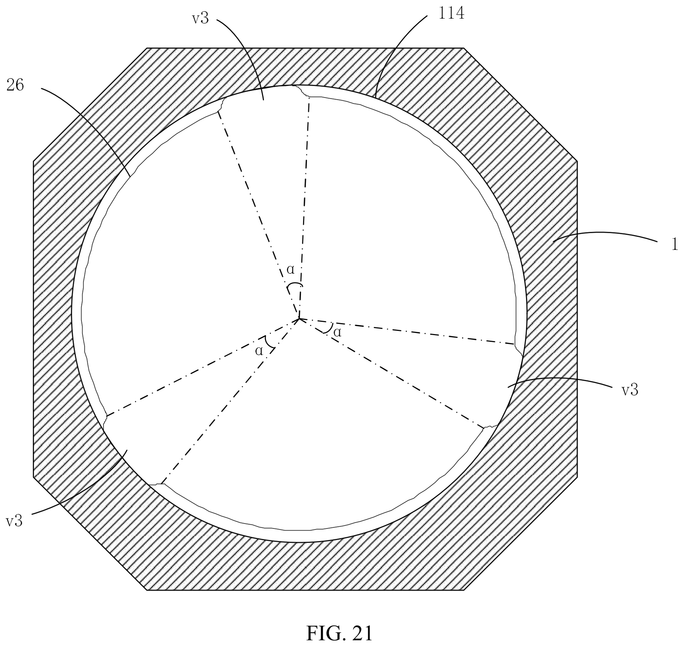

Corresponding to the quasi-circular lens 26, with reference to the cross-sectional diagram of fitting between the lens barrel 1 and the quasi-circular lens 26 shown in FIG. 21, the inner wall 11 of the lens barrel 1 includes at least one circular third annular mounting surface 114. Each lens protrusion v3 of the quasi-circular lens 16 abuts against the third annular mounting surface 114, and a surface that is of each lens protrusion v3 and that is in contact with the third annular mounting surface 114 is a curved surface. A radial direction of the lens group 2 is perpendicular to the optical axis of the lens group 2, and the radial direction of the lens group 2 is a radial direction of the quasi-circular lens 26.

The structure of the lens barrel 1 shown in FIG. 12a to FIG. 12c is used as a reference. When the inner wall of the lens barrel 1 includes the at least one third annular mounting surface 114 shown in FIG. 21, any third annular mounting surface 114 may be located on a side that is of the at least one first annular mounting surface 111 and that is close to the object side, and an arrangement of the third annular mounting surface 114 and the second annular mounting surface 112 along the optical axis is not limited, to ensure that the first lens that is of the lens assembly and that is close to the object side is a trimmed lens 2.

In conclusion, the lens barrel 1 provided in the embodiments of this application is designed to have a trimmed inner wall structure to fit the trimmed lens 21, and is designed to have a trimmed outer wall structure to fit the trimmed inner wall structure, so that a roundness requirement of the lens barrel 1 in manufacturing can be ensured while a volume of the lens barrel 1 is reduced. When the lens group 2 is assembled into the lens barrel 1, coaxiality between a plurality of lenses can be ensured, an assembly stress between the lens and the lens barrel 1 can be reduced, and reliability of the lens assembly 10 can be ensured. The lens assembly 10 having the lens barrel 1 has a relatively small size at an image-side end, to achieve miniaturization, so that the lens assembly 10 can be applied to a small terminal device, without occupying relatively large space of the terminal device. This facilitates a more appropriate layout of components in the terminal device, and also contributes to portability of the terminal device.

The foregoing descriptions are merely specific implementations of this application and not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A lens barrel, wherein the lens barrel comprises an inner wall and an outer wall, and the inner wall is configured to mount a lens group;
the inner wall comprises at least one first annular mounting surface, and each first annular mounting surface is configured to mount one trimmed lens in the lens group; each first annular mounting surface comprises a plurality of first curved surfaces and a plurality of first trimmed surfaces that are alternately connected around an optical axis of the lens group, and each first curved surface is configured to circumferentially fit into a corner arc of the trimmed lens; and a distance between any position of the first curved surface and the optical axis of the lens group is not less than a distance between any position of the first trimmed surface and the optical axis;
the outer wall comprises at least one first surface, and the first surface comprises a plurality of second curved surfaces and a plurality of second trimmed surfaces that are alternately connected around an optical axis of the lens; and a distance between any position of the second curved surface and the optical axis of the lens group is not less than a distance between any position of the second trimmed surface and the optical axis of the lens group; and
along a direction perpendicular to the optical axis of the lens group, a projection of any first annular mounting surface on the outer wall of the lens barrel is located on the first surface, the first curved surface corresponds to the second curved surface, and the first trimmed surface corresponds to the second trimmed surface.

2. The lens barrel according to claim 1, wherein the first curved surface comprises a first protrusion protruding toward the optical axis of the lens group, and each first protrusion has a first abutting portion configured to abut against an apex arc of the trimmed lens; and along a direction perpendicular to the optical axis of the lens, a distance between each first abutting portion and the optical axis is equal.

3. The lens barrel according to claim 2, wherein the inner wall further comprises at least one second annular mounting surface, and the at least one second annular mounting surface is located on a side that is of the at least one first annular mounting surface and that is close to an object side; and the second annular mounting surface is configured to circumferentially assemble a circular lens in the lens group, and each second annular mounting surface is rotationally symmetric around the optical axis of the lens; and
the outer wall comprises a second surface that is rotationally symmetric along the optical axis of the lens group; and along the direction perpendicular to the optical axis of the lens, a projection of the at least one second annular mounting surface on the outer wall of the lens barrel is located on the first surface.

4. The lens barrel according to claim 3, wherein each second annular mounting surface comprises three second protrusions, and each second protrusion has a second abutting portion configured to abut against an outer circumferential surface of the circular lens; and along the direction perpendicular to the optical axis of the lens, a distance between each second abutting portion and the optical axis is equal.

5. The lens barrel according to claim 4, wherein along the direction perpendicular to the optical axis of the lens group, a central axis of at least one of the second protrusions is collinear with a central axis of one of the first trimmed surfaces.

6. The lens barrel according to claim 4 or 5, wherein the first abutting portion is in point contact or surface contact with the trimmed lens; and/or the second abutting portion is in point contact or surface contact with the circular lens.

7. The lens barrel according to any one of claims 1 to 6, wherein the inner wall comprises a first bearing surface; and
along the optical axis of the lens, the first bearing surface is located at one end of the inner wall close to the object side, and the first bearing surface is configured to axially abut against a first lens that is of the lens group and that is close to the object side.

8. The lens barrel according to claim 7, wherein the inner wall comprises a second bearing surface; and
along the optical axis of the lens, the second bearing surface is located on a side that is of the first bearing surface and that is close to an image side, and the second bearing surface is configured to axially abut against a surface that is of a lens in the lens group and that faces toward the object side.

9. The lens barrel according to any one of claims 1 to 8, wherein along the optical axis of the lens group, the inner wall comprises an end trimmed surface located at an end portion of the lens barrel close to the object side, and the end trimmed surface is spaced apart from the first trimmed surface; and
along a radial direction of the lens barrel, a distance between each end trimmed surface and the second trimmed surface is within a range of 0.2 mm to 2 mm.

10. A lens assembly, comprising a lens group and the lens barrel according to any one of claims 1 to 9, wherein
the lens group comprises at least one trimmed lens, and each trimmed lens is correspondingly assembled on one first annular mounting surface; and
each trimmed lens comprises a plurality of corner arcs, and the plurality of corner arcs abut against a plurality of corresponding first curved surfaces of the first annular mounting surface in a one-to-one correspondence.

11. The lens assembly according to claim 10, wherein the inner wall of the lens barrel further comprises at least one second annular mounting surface, and the at least one second annular mounting surface is located on a side that is of the at least one first annular mounting surface and that is close to an object side; and
the lens group comprises at least one circular lens, and each circular lens is correspondingly assembled on one second annular mounting surface.

12. The lens assembly according to claim 11, wherein a surface that is of the trimmed lens adjacent to the at least one circular lens and that faces toward the object side abuts against the inner wall of the lens barrel.

13. The lens assembly according to any one of claims 10 to 12, wherein each trimmed lens is an injection-molded body, and an injection gate of each trimmed lens is located at a circumferential edge of the trimmed lens.

14. The lens assembly according to claim 13, wherein an injection gate of the at least one trimmed lens is located at one of the corner arcs; and
along a circumferential direction of the trimmed lens, a circumferential size of the injection gate is less than a circumferential size of the corner arc.

15. The lens assembly according to any one of claims 10 to 14, wherein at least one corner arc of the at least one trimmed lens comprises a side trimmed surface; and
along the circumferential direction of the trimmed lens, a circumferential size of the side trimmed surface is less than the circumferential size of the corner arc.

16. The lens assembly according to claim 15, wherein along the circumferential direction of the trimmed lens, the corner arc comprises a first curved sub-surface and a second curved sub-surface, and the first curved sub-surface and the second curved sub-surface are respectively located on two sides of the side trimmed surface.

17. The lens assembly according to any one of claims 10 to 16, wherein the lens group further comprises a first pressing ring for fastening to the inner wall of the lens barrel; and
along an optical axis of the lens group, the first pressing ring is fastened to the inner wall of the lens barrel and abuts against a surface that is of the trimmed lens group and that is close to an image side.

18. The lens assembly according to claim 17, wherein along the optical axis of the lens group, a plurality of reinforcing portions are disposed on a side that is of the first pressing ring and that faces toward the trimmed lens group, and the plurality of reinforcing portions are in a one-to-one correspondence with the plurality of first curved surfaces; and
the first pressing ring has an arcuate segment located between any two adjacent reinforcing portions, and the arcuate segment protrudes toward the object side.

19. The lens assembly according to claim 17 or 18, wherein the inner wall of the lens barrel comprises a first bearing surface; and
along the optical axis of the lens group, a surface that is of a first lens in the lens group and close to the object side and that faces toward the object side abuts against the first bearing surface.

20. The lens assembly according to claim 19, wherein the inner wall of the lens barrel comprises a second bearing surface, and the second bearing surface is located between the first bearing surface and the first pressing ring;
the lens group comprises a second pressing ring for fastening to the inner wall of the lens barrel, and the second pressing ring is located between the first bearing surface and the second bearing surface;
along the optical axis of the lens group, the lens group comprises a first lens group and a second lens, and the first lens group is located on a side that is of the second lens group and faces toward the object side; and
a surface that is of the first lens group and that faces toward the object side abuts against the first bearing surface, and a surface that is of the first lens group and that faces toward the image side abuts against the second pressing ring; and a surface that is of the second lens group and that faces toward the object side abuts against the second bearing surface, and a surface that is of the second lens group and faces toward the image side abuts against the first pressing ring.

21. The lens assembly according to claim 20, wherein the first lens group comprises a plurality of lenses, and any two adjacent lenses abut against each other along the optical axis of the lens group; and/or
the second lens group comprises a plurality of lenses, and any two adjacent lenses abut against each other along the optical axis of the lens group.

22. The lens assembly according to claim 20 or 21, wherein the first pressing ring is fastened to the inner wall of the lens by using a first connector, and the second pressing ring is fastened to the inner wall of the lens by using a second connector.

23. The lens assembly according to claim 22, wherein at least one of the first connector and the second connector is an adhesive, a screw, a screw, or a soldering material.

24. The lens assembly according to any one of claims 10 to 23, wherein each trimmed lens comprises an optical lens portion and an edge portion surrounding the optical lens portion; and
along a radial direction of the trimmed lens, a distance between an edge of the optical lens portion and the optical axis of the lens group is greater than 0.8 times a distance between a trimmed edge of the trimmed lens and the optical axis of the lens group.

25. The lens assembly according to claim 24, wherein along the radial direction of the trimmed lens, a distance between the optical trimmed edge and the edge of the optical lens portion is greater than 0.03 mm.

26. The lens assembly according to any one of claims 10 to 25, wherein the inner wall of the lens barrel further comprises at least one circular third annular mounting surface, and any third annular mounting surface is located on the side that is of the at least one first annular mounting surface and that is close to the object side; and
the lens group comprises at least one quasi-circular lens, a circumferential edge of each quasi-circular lens comprises at least three lens protrusions, and each lens protrusion has a curved surface configured to abut against the third annular mounting surface; and along a radial direction of the lens barrel, curved surfaces of the lens protrusions have a same radius.

27. The lens assembly according to claim 26, wherein along a circumferential direction of the quasi-circular lens, a central angle of any lens protrusion is within an angle range of 10° to 60°.

28. The lens assembly according to claim 27, wherein along the circumferential direction of the quasi-circular lens, a sum of central angles of the at least three lens protrusions is within an angle range of 30° to 180°.

29. A camera module, comprising an image sensor and the lens assembly according to any one of claims 10 to 28, wherein the image sensor is disposed on a side that is of the trimmed lens group and that is close to an image side.

30. A terminal device, comprising a housing and the camera module according to claim 29, wherein the camera module is mounted in the housing.
